# EUROPEAN PATENT APPLICATION

(11) **EP 4 304 238 A1**
(43) Date of publication of application: **10.01.2024**
(21) Application number: 22778696.9
(22) Date of filing: 23.03.2022
(51) Int. Cl.: H04W 24/02

(54) **MODEL PROCESSING METHOD, COMMUNICATION DEVICE, AND SYSTEM**

(30) Priority: 31.03.2021 CN 202110345989
(71) Applicant: Huawei Technologies Co., Ltd., Shenzhen, Guangdong 518129 (CN)
(72) Inventor: PENG, Chenghui, Shenzhen, Guangdong 518129 (CN); LIU, Zhe, Shenzhen, Guangdong 518129 (CN); LU, Jiaxun, Shenzhen, Guangdong 518129 (CN); WU, Jianjun, Shenzhen, Guangdong 518129 (CN)
(74) Representative: Pfenning, Meinig & Partner mbB
(86) International application number: PCT/CN2022/082528
(87) International publication number: WO 2022/206513

(57) **Abstract**

This application provides a model processing method, a communication apparatus, and a system. The method may include: A first communication apparatus collects local environment data. The first communication apparatus receives artificial intelligence AI collaboration information from a second communication apparatus. The first communication apparatus optimizes and/or learns an AI model of the first communication apparatus based on the locally collected environment data and the AI collaboration information provided by the second communication apparatus. In this manner, the communication apparatus can learn the AI model and/or optimize the AI model through collaboration of another communication apparatus. With reference to the AI collaboration information provided by the another communication apparatus, the communication apparatus can consider not only optimization of the communication apparatus but also overall optimization of a wireless network environment (in other words, a specific region range) in which the communication apparatus is located. Therefore, this application is more suitable for a wireless communication scenario, and can achieve a balance between individual optimization and overall optimization at a region level and improve implementability of applying AI to a communication network.

## Description

This application claims priority to Chinese Patent Application No. 202110345989.X, filed with the China National Intellectual Property Administration on March 31, 2021 and entitled "MODEL PROCESSING METHOD, COMMUNICATION APPARATUS, AND SYSTEM", which is incorporated herein by reference in its entirety.

### TECHNICAL FIELD

This application relates to the field of wireless communication, specifically, to wireless communication technologies to which intelligent networks are applied, and in particular, to a model processing method, a communication apparatus, and a system.

### BACKGROUND

Intelligentization of wireless networks is an important evolution trend. The 3rd Generation Partnership Project (3rd generation partnership project, 3GPP) introduces an artificial intelligence (artificial intelligence, AI) capability by newly adding a network data analytics function (network data analytics function, NWDAF) to a 5th generation (5th generation, 5G) network.

An NWDAF of an existing wireless network system collects data from conventional network functions, learns a model through data analysis, and provides AI optimization services such as data analysis for the network functions. Such a system architecture cannot support the wireless networks in coping with emergence of new scenarios and requirements such as real-time AI and high data privacy and security protection in the future.

### SUMMARY

This application provides a model processing method, a communication apparatus, and a system that are more suitable for a wireless communication scenario, to achieve a balance between individual optimization and overall optimization at a region level, and improve implementability of applying AI to a communication network.

According to a first aspect, a model processing method is provided. The method may be performed by a communication device, or may be performed by a chip or a circuit used in the communication device. This is not limited in this application. For ease of description, the following provides descriptions by using an example in which a first communication apparatus performs the method.

The method may include: The first communication apparatus collects first data information. The first communication apparatus receives artificial intelligence AI collaboration information from a second communication apparatus. The first communication apparatus processes an AI model of the first communication apparatus based on the first data information and the AI collaboration information.

For example, the processing an AI model may include AI model updating and/or AI model inference, in other words, AI model learning and/or AI model optimization.

For example, that the first communication apparatus collects first data information indicates that the first communication apparatus collects or obtains local data information, in other words, the first communication apparatus collects or obtains environment data information, or the first communication apparatus collects or obtains data information of a communication environment in which the first communication apparatus is located.

According to the foregoing technical solution, the communication apparatus may process the AI model (for example, learn the AI model and/or optimize the AI model) through collaboration of another communication apparatus. Using an example in which the first communication apparatus optimizes the AI model, the first communication apparatus may optimize the AI model based on both the data information collected by the first communication apparatus and the AI collaboration information provided by the second communication apparatus. With reference to the AI collaboration information provided by the second communication apparatus, the first communication apparatus can consider not only optimization of the first communication apparatus but also overall optimization of a wireless network environment (in other words, a specific region range) in which the first communication apparatus is located, to implement overall AI optimization at a region level.

With reference to the first aspect, in some implementations of the first aspect, the first communication apparatus includes a first-type communication interface and/or a second-type communication interface, where the first-type communication interface is used by the first communication apparatus to receive the AI collaboration information from the second communication apparatus, and the second-type communication interface is configured to transmit the first data information between different functions in the first communication apparatus.

According to the foregoing technical solution, at least two types of communication interfaces (namely, the first-type communication interface and the second-type communication interface) may be defined for the communication apparatus, to support direct AI collaboration between communication apparatuses in a wireless network.

With reference to the first aspect, in some implementations of the first aspect, the first communication apparatus includes a first AI function and a first communication function, and the second communication apparatus includes a second AI function. That the first communication apparatus receives AI collaboration information from a second communication apparatus includes: The first AI function receives the AI collaboration information from the second AI function through the first-type communication interface.

According to the foregoing technical solution, a distributed intelligent collaboration platform is provided. For example, the communication apparatus includes the AI function and the communication function. The AI function may exchange the AI collaboration information with the AI function of the another communication apparatus, and may exchange the data information with the communication function in the communication apparatus. In this way, AI capabilities of various communication apparatuses can be fully utilized to support the direct AI collaboration between the communication apparatuses in the wireless network, to better implement the overall optimization at the regional level.

With reference to the first aspect, in some implementations of the first aspect, the first communication apparatus includes the first AI function and the first communication function. That the first communication apparatus collects first data information includes: The first communication function collects the first data information. The first communication function sends the first data information to the first AI function through the second-type communication interface.

According to the foregoing technical solution, different functions in the first communication apparatus may exchange information through the first-type communication interface.

With reference to the first aspect, in some implementations of the first aspect, the method further includes: The first communication apparatus sends, to the second communication apparatus, semantic information obtained through the AI model processing of the first communication apparatus and/or a result of the AI model processing of the first communication apparatus.

According to the foregoing technical solution, the first communication apparatus may process the AI model in collaboration with the second communication apparatus, or may perform further optimization and/or learning based on processing and feedback of the second communication apparatus, to implement better global optimization at the region level.

With reference to the first aspect, in some implementations of the first aspect, that the first communication apparatus receives AI collaboration information from a second communication apparatus includes: The first communication apparatus receives control plane signaling from the second communication apparatus, where the control plane signaling includes the AI collaboration information. Alternatively, the first communication apparatus receives user plane signaling from the second communication apparatus, where the user plane signaling includes the AI collaboration information.

According to the foregoing technical solution, the AI collaboration information may be transmitted by using the control plane signaling or the user plane signaling. This is not limited.

According to a second aspect, a model processing method is provided. The method may be performed by a communication device, or may be performed by a chip or a circuit used in the communication device. This is not limited in this application. For ease of description, the following provides descriptions by using an example in which a second communication apparatus performs the method.

The method may include: The second communication apparatus obtains artificial intelligence AI collaboration information. The second communication apparatus sends the AI collaboration information to a first communication apparatus, where the AI collaboration information is used by the first communication apparatus to process an AI model of the first communication apparatus.

According to the foregoing technical solution, the second communication apparatus may provide the AI collaboration information for the first communication apparatus, to assist the first communication apparatus in optimizing the AI model. This can implement overall AI optimization at a region level.

With reference to the second aspect, in some implementations of the second aspect, the AI collaboration information includes second data information. That the second communication apparatus obtains AI collaboration information includes: The second communication apparatus collects the second data information.

For example, that the second communication apparatus collects the second data information indicates that the second communication apparatus collects or obtains local data information, in other words, the second communication apparatus collects or obtains environment data information.

With reference to the second aspect, in some implementations of the second aspect, that the second communication apparatus sends the AI collaboration information to a first communication apparatus includes: The second communication apparatus sends the AI collaboration information to the first communication apparatus after receiving a request from the first communication apparatus. Alternatively, the second communication apparatus periodically sends the AI collaboration information to the first communication apparatus.

With reference to the second aspect, in some implementations of the second aspect, the second communication apparatus includes a first-type communication interface and/or a second-type communication interface, where the first-type communication interface is used by the second communication apparatus to send the AI collaboration information to the first communication apparatus, and the second-type communication interface is configured to transmit the data information between different functions in the second communication apparatus.

With reference to the second aspect, in some implementations of the second aspect, the second communication apparatus includes a second AI function and a second communication function, and the first communication apparatus includes a first AI function. That the second communication apparatus sends the AI collaboration information to a first communication apparatus includes: The second AI function sends the AI collaboration information to the first AI function through the first-type communication interface.

With reference to the second aspect, in some implementations of the second aspect, the second communication apparatus includes the second AI function and the second communication function. That the second communication apparatus obtains AI collaboration information includes: The second communication function collects the second data information. The second communication function sends the second data information to the second AI function through the second-type communication interface.

With reference to the second aspect, in some implementations of the second aspect, the method further includes: The second communication apparatus receives, from the first communication apparatus, semantic information obtained through the AI model processing of the first communication apparatus and/or a result of the AI model processing of the first communication apparatus.

With reference to the second aspect, in some implementations of the second aspect, that the second communication apparatus sends the AI collaboration information to a first communication apparatus includes: The second communication apparatus sends control plane signaling to the first communication apparatus, where the control plane signaling includes the AI collaboration information. Alternatively, the second communication apparatus sends user plane signaling to the first communication apparatus, where the user plane signaling includes the AI collaboration information.

According to a third aspect, a first communication apparatus is provided. The first communication apparatus includes a first artificial intelligence AI function and a first communication function. The first communication function is configured to collect first data information. The first communication function is further configured to send the first data information to the first AI function. The first AI function is configured to receive AI collaboration information from a second communication apparatus. The first AI function is further configured to process an AI model of the first communication apparatus based on the first data information and the AI collaboration information.

With reference to the third aspect, in some implementations of the third aspect, the first communication apparatus includes a first-type communication interface and/or a second-type communication interface, where the first-type communication interface is used by the first AI function to receive the AI collaboration information from the second communication apparatus, and the second-type communication interface is configured to transmit the first data information between the first communication function and the first AI function.

With reference to the third aspect, in some implementations of the third aspect, the second communication apparatus includes a second AI function, and the first AI function is specifically configured to receive the AI collaboration information from the second AI function.

With reference to the third aspect, in some implementations of the third aspect, the first AI function is further configured to send, to the second communication apparatus, semantic information obtained through the AI model processing of the first communication apparatus and/or a result of the AI model processing of the first communication apparatus.

With reference to the third aspect, in some implementations of the third aspect, the first AI function is specifically configured to receive control plane signaling from the second communication apparatus, where the control plane signaling includes the AI collaboration information. Alternatively, the first AI function is specifically configured to receive user plane signaling from the second communication apparatus, where the user plane signaling includes the AI collaboration information.

According to a fourth aspect, a first communication apparatus is provided. The first communication apparatus includes a first-type communication interface and a second-type communication interface. The first-type communication interface is used by the first communication apparatus to receive artificial intelligence AI collaboration information from a second communication apparatus. The second-type communication interface is configured to transmit first data information between different functions in the first communication apparatus. The first communication apparatus is further configured to process an AI model of the first communication apparatus based on the first data information and the AI collaboration information.

According to the foregoing technical solution, at least two types of communication interfaces, for example, the first-type communication interface and the second-type communication interface, may be defined in the communication apparatus. The first-type communication interface is a communication interface between different communication apparatuses, in other words, the first-type communication interface may be for information exchange between different communication apparatuses. The second-type communication interface is a communication interface between different functions in the communication apparatus, in other words, the second-type communication interface may be for information exchange between different functions in the communication apparatus. That the communication apparatus includes two types of communication interfaces is defined, to support direct AI collaboration between communication apparatuses in a wireless network. This can implement overall optimization at a region level.

With reference to the fourth aspect, in some implementations of the fourth aspect, the first communication apparatus includes a first AI function and a first communication function. The first-type communication interface is specifically used by the first AI function to receive the AI collaboration information from the second communication apparatus. The second-type communication interface is specifically configured to transmit the first data information between the first communication function and the first AI function.

With reference to the fourth aspect, in some implementations of the fourth aspect, the second communication apparatus includes a second AI function. The first-type communication interface is specifically used by the first AI function to receive the AI collaboration information from the second AI function.

With reference to the fourth aspect, in some implementations of the fourth aspect, the first-type communication interface is further configured to send, to the second communication apparatus, semantic information obtained through the AI model processing of the first communication apparatus and/or a result of the AI model processing of the first communication apparatus.

With reference to the fourth aspect, in some implementations of the fourth aspect, the first-type communication interface is specifically used by the first communication apparatus to receive control plane signaling from the second communication apparatus, where the control plane signaling includes the AI collaboration information. Alternatively, the first-type communication interface is specifically used by the first communication apparatus to receive user plane signaling from the second communication apparatus, where the user plane signaling includes the AI collaboration information.

With reference to any one of the first aspect to the fourth aspect, in some implementations, the AI collaboration information includes the second data information collected by the second communication apparatus and/or information related to AI model processing of the second communication apparatus.

With reference to any one of the first aspect to the fourth aspect, in some implementations, the information related to the AI model processing of the second communication apparatus includes one or more of the following: semantic information obtained through the AI model processing of the second communication apparatus, action information of the second communication apparatus, reward information obtained through action execution by the second communication apparatus, reward information predicted by the second communication apparatus, and preset target information of the second communication apparatus.

With reference to any one of the first aspect to the fourth aspect, in some implementations, the preset target information of the second communication apparatus includes one or more of the following information: an energy saving target, a quality of service target, and a reliability target of the second communication apparatus.

With reference to any one of the first aspect to the fourth aspect, in some implementations, both the first communication apparatus and the second communication apparatus are terminal devices; both the first communication apparatus and the second communication apparatus are network devices; the first communication apparatus is a terminal device, and the second communication apparatus is a network device; the first communication apparatus is a terminal device or a network device, and the second communication apparatus is a central device; or the first communication apparatus is a central device, and the second communication apparatus is a terminal device or a network device.

According to a fifth aspect, a model processing apparatus is provided. The apparatus is configured to perform the method provided in the first aspect or the second aspect. Specifically, the apparatus may include units and/or modules, such as a processing unit and/or a communication unit, configured to perform the method provided in the first aspect or the second aspect.

In an implementation, the apparatus is a communication device. When the apparatus is the communication device, the communication unit may be a transceiver or an input/output interface, and the processing unit may be a processor.

In another implementation, the apparatus is a chip, a chip system, or a circuit used in a communication device. When the apparatus is the chip, the chip system, or the circuit used in the communication device, the communication unit may be an input/output interface, an interface circuit, an output circuit, an input circuit, a pin, a related circuit, or the like on the chip, the chip system, or the circuit; and the processing unit may be a processor, a processing circuit, a logic circuit, or the like.

Optionally, the transceiver may be a transceiver circuit. Optionally, the input/output interface may be an input/output circuit.

According to a sixth aspect, a model processing apparatus is provided. The apparatus includes a processor. The processor is coupled to a memory, and may be configured to execute instructions in the memory, to implement the method in the first aspect or the second aspect. Optionally, the apparatus further includes a communication interface. The processor is coupled to the communication interface, and the communication interface is configured to perform data and/or instruction transmission with the outside. Optionally, the apparatus further includes the memory.

In an implementation, the apparatus is a communication device. When the apparatus is the communication device, the communication unit may be a transceiver or an input/output interface, and the processing unit may be a processor.

In another implementation, the apparatus is a chip, a chip system, or a circuit used in a communication device. When the apparatus is the chip, the chip system, or the circuit used in the communication device, the communication unit may be an input/output interface, an interface circuit, an output circuit, an input circuit, a pin, a related circuit, or the like on the chip, the chip system, or the circuit; and the processing unit may be a processor, a processing circuit, a logic circuit, or the like.

Optionally, the transceiver may be a transceiver circuit. Optionally, the input/output interface may be an input/output circuit.

According to a seventh aspect, a model processing apparatus is provided. The apparatus includes: a memory, configured to store a program; and a processor, configured to execute the program stored in the memory. When the program stored in the memory is executed, the processor is configured to perform the method provided in the first aspect or the second aspect.

In an implementation, the apparatus is a communication device.

In another implementation, the apparatus is a chip, a chip system, or a circuit used in a communication device.

According to an eighth aspect, this application provides a processor, configured to perform the methods provided in the foregoing aspects. In a process of performing these methods, a process of sending the foregoing information and a process of obtaining/receiving the foregoing information in the foregoing methods may be understood as a process of outputting the foregoing information by the processor and a process of receiving the foregoing inputted information by the processor. When outputting the information, the processor outputs the information to a transceiver, so that the transceiver transmits the information. After the information is outputted by the processor, other processing may further need to be performed on the information before the information arrives at the transceiver. Similarly, when the processor receives the foregoing inputted information, the transceiver obtains/receives the foregoing information, and inputs the information into the processor. Further, after the transceiver receives the foregoing information, other processing may need to be performed on the information before the information is inputted into the processor.

According to the foregoing principle, for example, receiving the AI collaboration information in the foregoing methods may be understood as receiving the inputted AI collaboration information by the processor.

Unless otherwise specified, or if operations such as transmitting, sending, and obtaining/receiving related to the processor do not contradict an actual function or internal logic of the operations in related descriptions, all the operations may be more generally understood as operations such as outputting, receiving, and inputting of the processor, instead of operations of transmitting, sending, and receiving directly performed by a radio frequency circuit and an antenna.

In an implementation process, the processor may be a processor specially configured to perform these methods, or a processor, for example, a general-purpose processor, that executes computer instructions in the memory to perform these methods. The memory may be a non-transitory (non-transitory) memory, for example, a read-only memory (Read-Only Memory, ROM). The memory and the processor may be integrated on a same chip, or may be separately disposed on different chips. A type of the memory and a manner of disposing the memory and the processor are not limited in embodiments of this application.

According to a ninth aspect, a computer-readable storage medium is provided. The computer-readable storage medium stores program code executed by a device, and the program code is for performing the method provided in the first aspect or the second aspect.

According to a tenth aspect, a computer program product including instructions is provided. When the computer program product runs on a computer, the computer is enabled to perform the method provided in the first aspect or the second aspect.

According to an eleventh aspect, a chip is provided. The chip includes a processor and a communication interface. The processor reads, through the communication interface, instructions stored in a memory, to perform the method provided in the first aspect or the second aspect.

Optionally, in an implementation, the chip may further include the memory. The memory stores the instructions. The processor is configured to execute the instructions stored in the memory. When the instructions are executed, the processor is configured to perform the method provided in the first aspect or the second aspect.

According to a twelfth aspect, a model processing system is provided. The system includes the foregoing first communication apparatus, includes the foregoing second communication apparatus, or includes the foregoing first communication apparatus and second communication apparatus.

### BRIEF DESCRIPTION OF DRAWINGS

FIG. 1 is a simplified schematic diagram of a communication system 100 usable in embodiments of this application;
FIG. 2 is a schematic diagram of a network architecture;
FIG. 3 is a schematic diagram of a connection between an NWDAF and an NF;
FIG. 4 is a schematic diagram of a model processing system according to an embodiment of this application;
FIG. 5 is a schematic diagram of a model processing system according to another embodiment of this application;
FIG. 6 is a schematic diagram of a connection between communication devices that is applicable to an embodiment of this application;
FIG. 7 is another schematic diagram of a connection between communication devices that is applicable to an embodiment of this application;
FIG. 8 is a schematic diagram of a model processing method according to an embodiment of this application;
FIG. 9 is a schematic diagram of a model processing method applicable to an embodiment of this application;
FIG. 10 is a schematic diagram of a model processing method applicable to another embodiment of this application;
FIG. 11 is a schematic diagram of exchange that is of AI collaboration information by using control plane signaling and that is applicable to an embodiment of this application;
FIG. 12 is a schematic diagram of exchange that is of AI collaboration information by using user plane signaling and that is applicable to an embodiment of this application;
FIG. 13 is another schematic diagram of exchange that is of AI collaboration information by using user plane signaling and that is applicable to an embodiment of this application;
FIG. 14 is still another schematic diagram of exchange that is of AI collaboration information by using user plane signaling and that is applicable to an embodiment of this application;
FIG. 15 is a schematic block diagram of a model processing apparatus according to an embodiment of this application;
FIG. 16 is another schematic block diagram of a model processing apparatus according to an embodiment of this application;
FIG. 17 is still another schematic block diagram of a model processing apparatus according to an embodiment of this application; and
FIG. 18 is a schematic diagram of a hardware structure of a chip according to an embodiment of this application.

### DESCRIPTION OF EMBODIMENTS

The following describes technical solutions in this application with reference to the accompanying drawings.

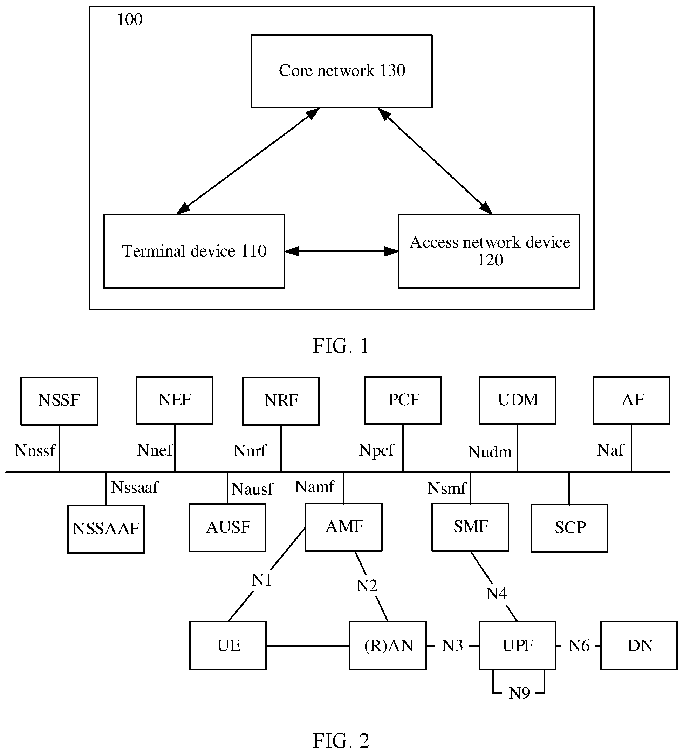

To help understand embodiments of this application, a communication system usable in embodiments of this application is first described with reference to FIG. 1.

In an example, FIG. 1 is a simplified schematic diagram of a communication system 100 usable in embodiments of this application.

As shown in FIG. 1, the communication system 100 may include one or more terminal devices, for example, a terminal device 110. The one or more terminal devices may be connected to each other or connected to one or more access network devices. As shown in FIG. 1, the communication system 100 may further include the one or more access network (access network, AN) devices, for example, an access network device 120. An access network may be a radio access network (radio access network, RAN) or an AN, and is represented by (R)AN below. Optionally, the communication system 100 may further include a core network, for example, a core network 130. The device (for example, the terminal device and/or the network device) in the communication system 100 may be connected to the core network in a wireless or wired manner. A core network device and the radio access network device may be different physical devices independent of each other, functions of the core network device and logical functions of the radio access network device may be integrated into a same physical device, or a part of functions of the core network device and a part of functions of the radio access network device may be integrated into one physical device. Terminal devices may be connected to each other in a wired or wireless manner, so are radio access network devices. Optionally, the communication system 100 may further include another network device, for example, a wireless relay device or a wireless backhaul device.

The access network device (for example, the access network device 120) may be a device that is deployed in the access network (R)AN and that provides a wireless communication function for the terminal device, or may be a network node, for example, a next generation node, a conventional node, or a combination thereof. The access network device may be configured to communicate with the terminal device and/or another access network device. In this application, the access network device is sometimes also referred to as the network device. A non-limitative example of the access network device is a base station (base station, BS). In this application, the BS may be referenced in a broad sense by using any one of various names, for example, a next generation NodeB (next generation nodeB, gNodeB/gNB) in a 5G system, an evolved NodeB (evolved NodeB, eNodeB/eNB), a NodeB, a next generation base station in a 6th generation (6th generation, 6G) mobile communication system, a base station in a future mobile communication system, an access point in a wireless fidelity (wireless fidelity, Wi-Fi) system, a base transceiver station (base transceiver station, BTS), a transmission reception point (transmission reception point, TRP), a macro eNodeB (MacroeNB, MeNB), a pico eNodeB (PicoeNB, SeNB) (also referred to as a small cell), a multi-standard radio (multi-standard radio, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), and a positioning node. The base station may be a macro base station, a micro base station, a relay node, a donor node, an analogue, or a combination thereof. The base station may alternatively be an apparatus built in the foregoing device, for example, a communication module, a modem, or a chip in the foregoing device. A specific technology and a specific device form used by the access network device are not limited in embodiments of this application. The access network device may be fixed, or may be mobile. This is not limited. The access network device may support networks using a same access technology or different access technologies.

In embodiments of this application, the access network device may alternatively be an apparatus that supports exchanging artificial intelligence (artificial intelligence, AI) information with the terminal device or a network function, for example, another base station. It may be understood that, in embodiments of this application, the access network device may not only provide a communication service of a conventional network device (for example, the base station) for the one or more terminal devices, but also provide an AI information service for the one or more terminal devices. The AI information is specifically described below with reference to embodiments.

For ease of description and without loss of generality, the access network device is denoted as an xNB below.

The terminal device (for example, the terminal device 110) includes various devices having a wireless communication function that may be configured to connect a person, an object, a machine, and the like. The terminal device may be widely used in various scenarios, for example, a cellular communication scenario, a device-to-device (device-to-device, D2D) scenario, a vehicle-to-everything (vehicle-to-everything, V2X) scenario, a peer-to-peer (peer-to-peer, P2P) scenario, a machine-to-machine (machine-to-machine, M2M) scenario, a machine-type communications (machine-type communications, MTC) scenario, an internet of things (internet of things, IoT) scenario, a virtual reality (virtual reality, VR) scenario, an augmented reality (augmented reality, AR) scenario, an industrial control scenario, a self-driving scenario, a telemedicine scenario, a smart grid scenario, a smart furniture scenario, a smart office scenario, a smart wearable scenario, a smart transportation scenario, a smart city drone scenario, a robot scenario, a remote sensing scenario, a passive sensing scenario, a positioning scenario, a navigation and tracking scenario, and a self-delivery scenario. The terminal device may be a terminal in any one of the foregoing scenarios, for example, an MTC terminal or an IoT terminal. The terminal device may be a user equipment (user equipment, UE) in a 3rd generation partnership project (3rd generation partnership project, 3GPP) standard, a terminal (terminal), a fixed device, a mobile station (mobile station) device, namely, a mobile device, a subscriber unit (subscriber unit), a handheld device, a vehicle-mounted device, a wearable device, a cellular phone (cellular phone), a smartphone (smartphone), a SIP phone, a wireless data card, a personal digital assistant (personal digital assistant, PDA), a computer, a tablet computer, a notebook computer, a wireless modem, a handheld device (handset), a laptop computer (laptop computer), a computer having a wireless transceiver function, a smart book, a vehicle, a satellite, a global positioning system (global positioning system, GPS) device, a target tracking device, a flight device (for example, an unmanned aerial vehicle, a helicopter, a multi-helicopter, a four-helicopter, or an airplane), a ship, a remote control device, a smart home device, or an industrial device, may be an apparatus built in the foregoing device (for example, a communication module, a modem, or a chip in the foregoing device), or may be another processing device connected to the wireless modem. For ease of description, an example in which the terminal device is a terminal or a UE is used below for description.

It should be understood that, in some scenarios, the UE may further serve as a base station. For example, the UE may act as a scheduling entity that provides a sidelink signal between UEs in a V2X scenario, a D2D scenario, a P2P scenario, or the like.

In embodiments of this application, a function of the base station may be performed by a module (for example, a chip) in the base station, or may be performed by a control subsystem including the function of the base station. For example, the control subsystem including the base station function may be a control center in the foregoing terminal application scenarios such as the smart grid scenario, the industrial control scenario, the smart transportation scenario, and the smart city scenario. A function of the terminal may be performed by a module (for example, a chip or a modem) in the terminal, or may be performed by an apparatus including the function of the terminal.

The core network (for example, the core network 130) may be an apparatus or a software system deployed in a wireless network. The core network may include one or more core network nodes, to provide core network functions such as UE connection management, mobility management, and policy management. The core network may further provide a user plane gateway function to an external network, for example, an internet. The core network node may be a next generation (for example, 6G or a later version) core network node or a conventional (for example, 5G, 4th generation (4th generation, 4G), 3rd generation (3rd generation, 3G), or 2nd generation (2nd generation, 2G)) core network node. In a possible design, the core network 130 may include network elements such as an access and mobility management function (access and mobility management function, AMF) and a mobility management entity (mobility management entity, MME). The core network 130 may further include one or more network nodes in a public switched telephone network (public switched telephone network, PSTN), a packet data network, an optical network, and an internet protocol (internet protocol, IP) network, a wide area network (wide area network, WAN), a local area network (local area network, LAN), a wireless local area network (wireless local area network, WLAN), a wired network, a wireless network, a metropolitan area network, and another network, so that the terminal device 110 and/or the access network device 120 can communicate with each other.

In embodiments of this application, the core network may further support AI information exchange with the access network device (for example, the xNB), and may further support the AI information exchange with another device if necessary. It may be understood that, in embodiments of this application, the core network may not only provide a conventional service, for example, session management, mobility management, or policy management, of a conventional core network, but also provide a service for transmitting AI information. The AI information is specifically described below with reference to embodiments.

In systems using different radio access technologies, names of devices having the core network function and network functions included in the devices may be different. For example, a 4G core network is generally referred to as an evolved packet core (evolved packet core, EPC), and a 5G core network is generally referred to as a 5G core network (5G core network, 5GC or 5GCN). For ease of description and without loss of generality, the core network is denoted as an xCN below.

It should be understood that a communication apparatus or a communication device in this application may be the foregoing terminal device, the access network device, the core network device, or the like. This is not limited.

It should be further understood that the communication system 100 (for example, a wireless communication system) usable in embodiments of this application includes but is not limited to a narrowband-internet of things (narrowband-Internet of Things, NB-IoT) system, a global system for mobile communications (global system for mobile communications, GSM) system, an enhanced data rate for GSM evolution (enhanced data rate for GSM evolution, EDGE) system, a wideband code division multiple access (wideband code division multiple access, WCDMA) system, a code division multiple access 2000 (code division multiple access 2000, CDMA2000) system, a time division-synchronous code division multiple access (time division-synchronous code division multiple access, TD-SCDMA) system, a long term evolution (long term evolution, LTE) system, three application scenarios (enhanced mobile broadband (enhanced mobile broadband, eMBB), ultra-reliable and low latency communications (ultra-reliable and low latency communications, URLLC), and massive machine type communication (massive machine type communication, eMTC)) of a 5G mobile communication system, a 6G mobile communication system, a mobile communication system of a later version, and another mobile communication system that continuously evolves.

Generally, a connection service may be provided via the wireless network, and a connection service problem between devices, for example, a connection service problem between terminals or between a terminal and a server, may be resolved through a wireless network architecture. For example, FIG. 2 is a schematic diagram of a network architecture. The network architecture may be, for example, a network architecture in a 5G system.

As shown in FIG. 2, the network architecture may include but is not limited to: a network slice selection function (network slice selection function, NSSF), a network slice-specific authentication and authorization function (network slice-specific authentication and authorization function, NSSAAF), an authentication server function (authentication server function, AUSF), a unified data management (unified data management, UDM), a network exposure function (network exposure function, NEF), a network function repository function (NF repository function, NRF), a policy control function (policy control function, PCF), an application function (application function, AF), an AMF, a session management function (session management function, SMF), a signaling control point (signaling control point, SCP), a UE, a (R)AN, a user plane function (user plane function, UPF), and a data network (data network, DN). The DN is, for example, an internet. All the NSSF, the NSSAAF, the AUSF, the UDM, the NEF, the NRF, the PCF, the AF, the AMF, the SMF, the SCP, and the UPF may be considered as network elements in a core network (for example, a 5GC). The core network includes many different control plane functions and user plane functions. The control plane functions in the core network may include, for example, the SMF, the AMF, and the UDM. These function modules are connected to each other through a service-based architecture (service-based architecture, SBA).

In FIG. 2, a service-based interface provided by the NSSF externally may be Nnssf. A service-based interface provided by the NEF externally may be Nnef. A service-based interface provided by the NRF externally may be Nnrf. A service-based interface provided by the PCF externally may be Npcf. A service-based interface provided by the UDM externally may be Nudm. A service-based interface provided by the AF externally may be Naf. A service-based interface provided by the NSSAAF externally may be Nssaaf. A service-based interface provided by the AUSF externally may be Nausf. A service-based interface provided by the AMF externally may be Namf. A service-based interface provided by the SMF externally may be Nsmf. An interface between the control plane function and each of the RAN and the UPF is a non-service-based interface. The UE is connected to the AMF through an N1 interface, and is connected to the (R)AN by using a radio resource control (radio resource control, RRC) protocol. The (R)AN is connected to the AMF through an N2 interface, and is connected to the UPF through an N3 interface. The UPF is connected to the DN through an N6 interface, and is connected to the SMF through an N4 interface. An N9 interface is an interface between UPFs, for example, an interface between a visited-policy control function (visited-policy control function, V-PCF) and a home-policy control function (home-policy control function, H-PCF) or an interface between a UPF connected to the DN and a UPF connected to the RAN, and is configured to transmit user plane data between the UPFs. For related descriptions, refer to a 5G system architecture (5G system architecture) in a standard. For brevity, a connection relationship of the architecture is not described herein.

It should be understood that the network architecture shown above is merely an example for description, and a network architecture applicable to embodiments of this application is not limited thereto. Any network architecture that can implement functions of the foregoing network elements is applicable to embodiments of this application.

It should be further understood that the functions, in other words, the network elements, such as the AMF, the SMF, the UPF, the PCF, the UDM, the NSSF, and the AUSF shown in FIG. 2 may be understood as network elements configured to implement different functions, and for example, may be combined into a network slice based on a requirement. These network elements may be independent devices, may be integrated into a same device to implement different functions, may be network elements in a hardware device, may be software functions running on dedicated hardware, or may be virtualization functions instantiated on a platform (for example, a cloud platform). Specific forms of the network elements are not limited in this application.

It should be further understood that the foregoing names are defined merely for distinguishing between different functions, and should not constitute any limitation on this application. This application does not exclude a possibility of using other names in a 6G network and another future network. For example, in the 6G network, a part or all of the foregoing network elements may still use terms in 5G, or may use other names.

It should be further understood that the names of the interfaces between the network elements in FIG. 2 are merely examples, and the interfaces may have other names in a specific implementation. This is not specifically limited in this application. In addition, names of messages (or signaling) transmitted between the foregoing network elements are merely examples, and do not constitute any limitation on functions of the messages.

Intelligentization of wireless networks is an important evolution trend. 3GPP introduces an AI capability by newly adding a network data analytics function (network data analytics function, NWDAF) to a 5G network.

Main functions of the NWDAF include: collecting data from another network function (network function, NF) and an application function AF, collecting data from a network operation and maintenance system (for example, an operation, administration and maintenance (operation, administration and maintenance, OAM)), and providing a metadata exposure service, a data analysis service, and the like for the NF or the AF. The NWDAF is introduced mainly for automatic and intelligent network operation and maintenance, network performance and service experience optimization, end-to-end service level agreement (service level agreement, SLA) assurance, and the like. An AI model trained by the NWDAF may be applied to network fields such as mobility management, session management, and network automation, and an AI method is used to replace a numerical formula-based method in an original network function. The NWDAF is generally further responsible for AI model training (including serving as a central service unit in federated training).

The network architecture shown in FIG. 2 is used as an example. The NWDAF is not presented in the network architecture shown in FIG. 2. In a possible case, there may be a direct interface between the NWDAF and each of the NFs.

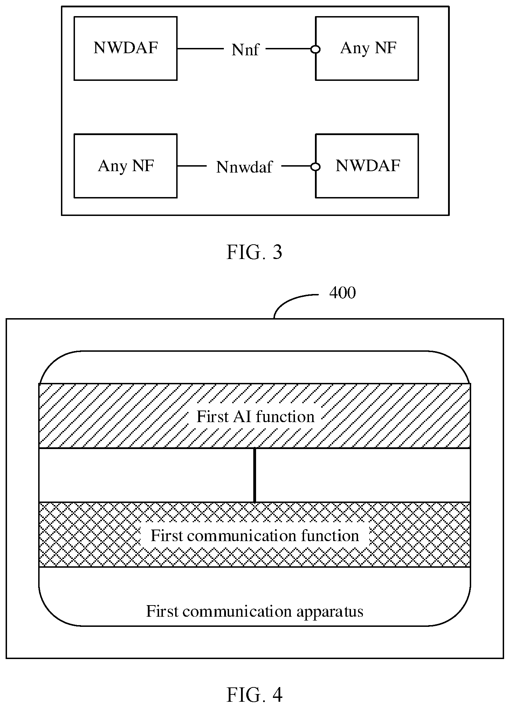

For example, FIG. 3 is a schematic diagram of a connection between an NWDAF and an NF.

As shown in FIG. 3, there are mainly two types of interfaces between the NWDAF and the NF: an Nnf interface and an Nnwdaf interface. The Nnf interface may be used by the NWDAF to request one or more of the following from another NF: a subscription to data transfer of a specific context, cancellation of the subscription to the data transfer, a specific report of data for the specific context, and the like. A 5G system architecture further allows the NWDAF to obtain management data from an OAM by invoking an operation and maintenance system service of the OAM. The Nnwdaf interface may be used by another NF to request one or more of the following from the NWDAF: a subscription to network analysis transfer of a specific context, cancellation of the subscription to the network analysis transfer, a specific report of network analysis of the specific context, and the like.

An NWDAF of an existing wireless network system mainly collects data from conventional NFs, learns a model through data analysis, and provides AI optimization services such as data analysis for the NFs.

In this application, considering a prospect of intelligence inclusiveness in future, intelligentization of a wireless network is not only reflected in the NWDAF, but also further evolves at a wireless network architecture level. AI is to further integrated with the wireless network deeply to achieve network-inherent intelligence and terminal intelligence, to cope with some possible new requirements and scenarios. For example, in a possible scenario, terminal types are diversified, and terminal connections are more flexible and intelligent. The terminal types are diversified. In a supper internet of things (supper IoT) (for example, an internet of things, an internet of vehicles, industry, and medical treatment) scenario and a scenario with massive connections, the terminal connections are more flexible, and the terminal has a specific AI capability. For another example, a possible requirement is the network-inherent intelligence. The network may provide not only a traditional communication connection service but also computing and AI services to better support an inclusive, real-time, and highly secure AI service. These new requirements and new scenarios may bring changes to a wireless network architecture and a communication mode.

Based on the possible scenarios and requirements that the wireless network may face in the future, the following two aspects may be considered:
In an aspect, various devices tend to perform AI model learning and inference locally.

As AI computing power is continuously integrated into various chips, AI computing power of the chips becomes increasingly strong, and various devices (such as a network device and a terminal device) are more likely to have AI capabilities. In addition, considering real-time AI and data privacy and security problems, the devices tend to perform AI model learning and inference locally, thereby reducing transmission of a large amount of data between different devices, and improving AI real-time performance and data security and privacy protection. The AI model learning and inference may include, for example, AI model enhancement and personalized learning.

For brevity, in the following, performing AI model learning and/or inference is represented by performing AI optimization (in other words, implementing AI optimization).

In another aspect, there is a specific logical collaboration relationship between devices in the wireless network.

For example, there is a specific logical collaboration relationship between a terminal device and a network device (for example, a base station), where for example, the terminal device and the network device (for example, the base station) may communicate with each other. For another example, there is a specific logical collaboration relationship between network devices, where for example, the network devices may communicate with each other. This relationship is internal logic of the wireless network and does not disappear because of application of the AI. Therefore, before the terminal device and the network device separately perform AI optimization (for example, perform AI model learning and inference), if the terminal device and the network device can exchange AI information with a related device that is in a logical relationship with the terminal device and the network device, an AI optimization effect of an individual device can be broken through, to achieve an overall AI optimization effect at a region level.

It may be understood that the overall optimization at the region level mentioned in embodiments of this application for a plurality of times indicates that when the device in the wireless network performs AI model optimization, the device considers not only optimization of the device but also overall optimization of a wireless network environment (in other words, a specific region range) in which the device is located. The overall optimization effect at the region level is usually more important for the wireless network. This is because: For the wireless network shared by multiple devices, considering fairness of user service provision, the overall optimization of the specific region range instead of optimization of a specific individual (namely, a specific device) is usually required.

In view of this, this application proposes improvements in at least two aspects. In an aspect, at a model processing system level, a logical function and/or a communication interface may be newly added to a communication apparatus (for example, a communication device (a network device, a terminal device, and the like)), so that AI capabilities of various communication apparatuses can be fully used to support direct AI collaboration between the communication apparatuses in the wireless network. In another aspect, at a model processing method level, when a specific communication apparatus performs AI optimization, a regional AI optimization policy may be formed through collaboration of another related communication apparatus, to implement the overall optimization at the region level.

In this application, the performing AI optimization is mentioned for a plurality of times. It should be understood that the performing AI optimization may represent performing AI model learning and/or inference. For unified descriptions below, the performing AI optimization is used.

With reference to the accompanying drawings, the following describes, in detail in two aspects, embodiments provided in this application.

In an aspect 1, with reference to FIG. 4 to FIG. 7, a model processing system provided in embodiments of this application is described.

FIG. 4 is a schematic diagram of a model processing system according to an embodiment of this application.

As shown in FIG. 4, the system 400 may include a first communication apparatus. The system 400 may further include more communication apparatuses. Herein, the first communication apparatus is used as an example for description.

As shown in FIG. 4, the first communication apparatus may include a first AI function and a first communication function.

According to embodiments of this application, a logical function may be newly added to a communication apparatus. For ease of description, the logical function newly added to the communication apparatus is denoted as an AI function below, and a function other than the AI function in the communication apparatus is denoted as a communication function. It may be understood that, according to embodiments of this application, the communication apparatus may include at least the communication function and the AI function. The AI function represents the logical function newly added to a conventional communication apparatus, in other words, a function related to AI. The communication function represents the function other than the AI function, for example, represents a conventional communication function of the communication apparatus.

It should be understood that the AI function and the communication function are obtained through logical function division, and other division may be performed in an actual implementation. This is not limited.

It should be further understood that, according to embodiments of this application, any communication apparatus may include the AI function and the communication function. The following mainly uses the first communication apparatus and a second communication apparatus as examples for description.

For differentiation, a communication function in the first communication apparatus is denoted as the first communication function, and an AI function in the first communication apparatus is denoted as the first AI function; and a communication function in the second communication apparatus is denoted as a second communication function, and an AI function in the second communication apparatus is denoted as a second AI function.

The first communication function may be configured to collect data information. In embodiments of this application, the data information may represent local data information, in other words, environment information or environment observation information of a communication environment in which the first communication apparatus is located. For example, the first communication function may be configured to collect environment data information, namely, the local data information, in other words, collect environment data information, namely, the local data information, from the communication environment in which the first communication apparatus is located. For differentiation, the data information collected by the first communication function in the first communication apparatus may be denoted as first data information. The first data information may represent a state parameter related to a communication state of the first communication apparatus. By way of example rather than limitation, the first data information may include but is not limited to, for example, one or more of the following: channel state information (channel state information, CSI) of the first communication apparatus, power consumption of the first communication apparatus, and an air interface resource of the first communication apparatus.

The first communication function may be further configured to send the first data information to the first AI function. The first data information sent by the first communication function may be used by the first AI function to process an AI model of the first communication apparatus.

The first AI function may be configured to receive AI collaboration information from the second communication apparatus. The AI collaboration information sent by the second communication apparatus may be for collaborating with the first AI function to process the AI model of the first communication apparatus.

By way of example rather than limitation, the AI collaboration information sent by the second communication apparatus may include data information (denoted as second data information for differentiation) collected by the second communication apparatus and/or information related to AI model processing of the second communication apparatus.

The second data information represents environment data information, namely, local data information, collected or obtained by the second communication apparatus, in other words, represents data information collected from a communication environment in which the second communication apparatus is located. The second data information may represent a state parameter related to a communication state of the second communication apparatus. By way of example rather than limitation, the second data information may include but is not limited to, for example, one or more of the following: CSI of the second communication apparatus, power consumption of the second communication apparatus, and an air interface resource of the second communication apparatus.

The information related to the AI model processing of the second communication apparatus may include, for example, information obtained through the AI model processing of the second communication apparatus and/or information related to an action formed by the second communication apparatus based on an AI model. The information related to the AI model processing of the second communication apparatus may represent information related to the AI model of the second communication apparatus. By way of example rather than limitation, the information related to the AI model processing of the second communication apparatus may include but is not limited to, for example, one or more of the following: multidimensional array information obtained through the AI model processing of the second communication apparatus, action information of the second communication apparatus, reward information obtained through the action execution by the second communication apparatus, reward information predicted by the second communication apparatus, and target information of the second communication apparatus (for example, an optimization target of the AI model of the second communication apparatus).

The following describes the AI collaboration information in detail with reference to an aspect 2.

In a possible implementation, the second AI function in the second communication apparatus sends the AI collaboration information to the first AI function, in other words, the first AI function receives the AI collaboration information sent by the second AI function.

The first AI function may be further configured to process the AI model of the first communication apparatus based on the first data information and the AI collaboration information provided by the second communication apparatus. In embodiments of this application, the processing the AI model may include at least: performing AI model learning and/or inference, in other words, performing AI model optimization and/or updating. For brevity, the processing the AI model is uniformly indicated by AI optimization below. In other words, the AI optimization below may include AI model learning, AI model inference, AI model updating, and the like.

The AI model learning may be understood as, for example, obtaining the AI model through learning. For example, in this embodiment of this application, the first communication apparatus obtains the AI model of the first communication apparatus through learning by using the locally collected data information and the AI collaboration information provided by another communication apparatus.

The AI model inference may be understood as, for example, performing prediction and inference based on the AI model. For example, the first communication apparatus performs inference and prediction based on the AI model of the first communication apparatus by using the locally collected data information and the AI collaboration information provided by the another communication apparatus. In other words, a result of the prediction and inference performed by the first communication apparatus based on the AI model depends on not only local data inference but also related information of another communication device in a region.

The AI model updating may be understood as, for example, updating the AI model, for example, updating an AI model obtained through learning. For example, the first communication apparatus updates the AI model of the first communication apparatus by using the locally collected data information and the AI collaboration information provided by the another communication apparatus. In other words, when updating the AI model, the first communication apparatus considers not only the locally collected data information but also the related information of the another communication device in the region.

It should be understood that, how to process the AI model is not limited in embodiments of this application. Any solution in which both the locally collected data information and the AI collaboration information provided by the another communication apparatus are considered during the AI model processing falls within the protection scope of embodiments of this application.

Transmission between the AI function and the communication function and transmission between different communication apparatuses are not strictly limited in this application. In a possible implementation, two types of communication interfaces may be defined. One type is for transmission between different functions in the communication apparatus, and the other type is for transmission between different communication apparatuses. The following uses the first communication apparatus as an example for description.

In a possible design, the first communication apparatus includes a first-type communication interface and/or a second-type communication interface.

In an example, the first communication apparatus includes the first-type communication interface. The first-type communication interface may be used by the first AI function to receive the AI collaboration information from the second communication apparatus. For example, the first-type communication interface is an interface between the first AI function and the second AI function, and the second AI function sends the AI collaboration information to the first AI function through the first-type communication interface.

In another example, the first communication apparatus includes the second-type communication interface. The second-type communication interface may be configured to transmit the data information between the first communication function and the first AI function. For example, the first communication function sends the first data information to the first AI function through the second-type communication interface.

It should be understood that, the foregoing different communication apparatuses exchange the AI collaboration information through the first-type communication interface, and the AI function and the communication function exchange the data information through the second-type communication interface. This is merely an example for description, and is not limited. Any manner in which different functions in the communication apparatus can exchange information or any manner in which different communication apparatuses can exchange information is applicable to embodiments of this application. For example, the AI collaboration information is transmitted between the different communication apparatuses through a transit device. For example, the second communication apparatus sends the AI collaboration information to the transit device, and the transit device forwards the AI collaboration information to the first communication apparatus. For another example, the different functions in the communication apparatus may read the data information from each other. For example, the AI function in the communication apparatus may read the data information collected by the communication function in the communication apparatus.

It should be further understood that the first-type communication interface or the second-type communication interface may be an existing communication interface that is reused or a newly added interface. This is not limited. For example, the first-type communication interface may be a conventional communication interface between the communication apparatuses. For example, the AI collaboration information may be exchanged between the first communication apparatus and the second communication apparatus by reusing an existing communication interface for information exchange between the communication apparatuses. The second-type communication interface may be a conventional communication interface between the different functions in the communication apparatus. For example, the data information may be exchanged between the first communication apparatus and the second communication apparatus by reusing an existing communication interface for information exchange between the different functions in the communication apparatus.

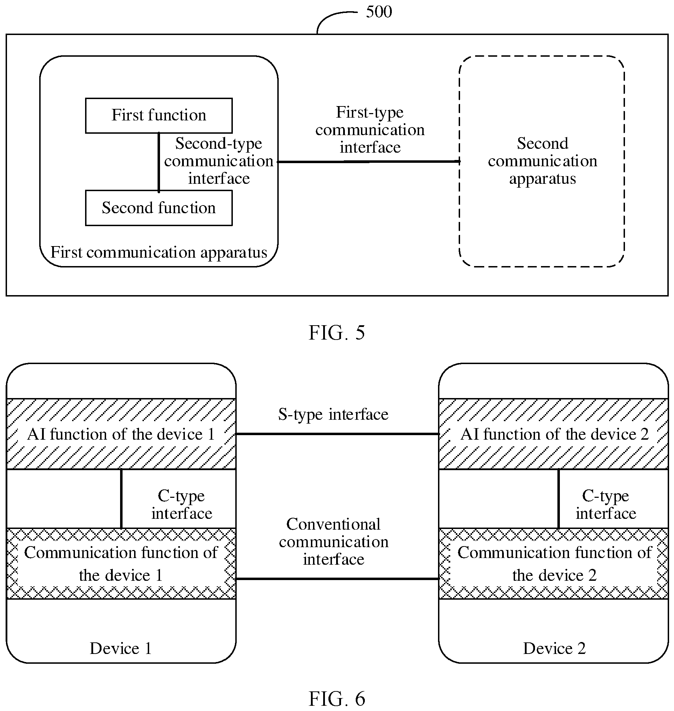

The first-type communication interface and the second-type communication interface are described in detail below with reference to a system 500 shown in FIG. 5.

Based on the system 400 shown in FIG. 4, a distributed intelligent collaboration platform is provided, and can support intelligent collaboration between AI of the communication apparatus and third-party AI (namely, AI of the another communication apparatus that provides the AI collaboration information). For example, the communication apparatus includes the AI function and the communication function. The AI function may exchange the AI collaboration information with the AI function of the another communication apparatus, and may exchange the data information with the communication function in the communication apparatus. In this way, AI capabilities of various communication apparatuses can be fully utilized to support direct AI collaboration between the communication apparatuses in a wireless network, to implement overall optimization at a region level.

FIG. 5 is a schematic diagram of a model processing system according to another embodiment of this application.

As shown in FIG. 5, the system 500 may include a first communication apparatus. Optionally, the system 500 may further include a second communication apparatus. The system 500 may further include more communication apparatuses. Herein, the first communication apparatus is mainly used as an example for description.

As shown in FIG. 5, the first communication apparatus includes a first-type communication interface and/or a second-type communication interface.

The first-type communication interface may be used by the first communication apparatus to receive AI collaboration information from the second communication apparatus.

In a possible implementation, the first communication apparatus is the communication apparatus in the foregoing system 400, in other words, the first communication apparatus includes a first communication function and a first AI function.

The first-type communication interface may be configured to exchange the AI collaboration information between the first AI function and the second communication apparatus. For example, the second communication apparatus sends the AI collaboration information to the first AI function through the first-type communication interface. For example, the second communication apparatus includes a second AI function, and the second AI function sends the AI collaboration information to the first AI function through the first-type communication interface.

It should be understood that the first-type communication interface is a logical interface. In a specific standard or product implementation, the first-type communication interface and a conventional communication interface (for example, a conventional communication interface between communication apparatuses) may be defined and implemented separately or together. A specific implementation of the first-type communication interface does not limit the protection scope of embodiments of this application. For example, for a first-type communication interface between a UE and an xNB, AI collaboration information may be exchanged based on RRC over a conventional communication interface. In this case, the first-type communication interface and the conventional communication interface may be defined and implemented together.

The second-type communication interface may be configured to transmit data information between different functions in the first communication apparatus.

As shown in FIG. 5, using an example in which the first communication apparatus includes a first function and a second function, the second-type communication interface may be configured to transmit the data information between the first function and the second function. It should be understood that the first function and the second function are obtained through logical function division, and other division may be performed in an actual implementation. This is not limited. It should be further understood that the first function and the second function are merely named for differentiation without loss of generality. For example, the first function is an AI function, and the second function is a communication function. The first function in the first communication apparatus is, for example, the first AI function, and the second function in the first communication apparatus is, for example, the first communication function; and a first function in the second communication apparatus is, for example, the second AI function, and a second function in the second communication apparatus is, for example, a second communication function.

In a possible implementation, the first communication apparatus is the communication apparatus in the foregoing system 400, in other words, the first communication apparatus includes the first communication function and the first AI function. That is, the first function is the first AI function, and the second function is the first communication function.

The second-type communication interface may be configured to exchange information between the first communication function and the first AI function. For example, the first communication function sends the collected data information to the first AI function through the second-type communication interface.

It should be understood that the second-type communication interface is a logical interface. In a specific standard or product implementation, the second-type communication interface and a conventional communication interface (for example, a conventional communication interface between the different functions in the communication apparatus) may be defined and implemented separately or together. A specific implementation of the second-type communication interface does not limit the protection scope of embodiments of this application.

The first communication apparatus may be configured to process an AI model of the first communication apparatus based on the data information and the AI collaboration information.

The processing an AI model may include at least: performing AI model learning and/or inference, in other words, performing AI model optimization and/or updating. For brevity, the processing an AI model is uniformly indicated by AI optimization below.

According to embodiments of this application, at least two types of communication interfaces may be defined in the communication apparatus, and are denoted as the first-type communication interface and the second-type communication interface for differentiation. The first-type communication interface is a communication interface between different communication apparatuses, in other words, the first-type communication interface may be for information exchange between different communication apparatuses. The second-type communication interface is a communication interface between different functions in the communication apparatus, in other words, the second-type communication interface may be for information exchange between different functions in the communication apparatus.

It should be understood that, according to embodiments of this application, any communication apparatus may include the first-type communication interface and the second-type communication interface.

It should be further understood that, in embodiments of this application, the first-type communication interface represents the communication interface for the information exchange between the different communication apparatuses, and a quantity of interfaces in the first-type communication interface is not limited. For example, the first-type communication interface includes one communication interface, and the first communication apparatus and the second communication apparatus exchange information through the communication interface. For example, the first AI function in the first communication apparatus and the second AI function in the second communication apparatus exchange information through the communication interface, and the first communication function in the first communication apparatus and the second communication function in the second communication apparatus also exchange information through the communication interface. For another example, the first-type communication interface includes a plurality of communication interfaces, and different functions in the first communication apparatus and the second communication apparatus exchange information through different communication interfaces. For example, there is a communication interface (which may be, for example, a newly added communication interface) between the first AI function in the first communication apparatus and the second AI function in the second communication apparatus, and there is a communication interface (which may be, for example, a conventional communication interface) between the first communication function in the first communication apparatus and the second communication function in the second communication apparatus. The first AI function and the second AI function exchange information (for example, the AI collaboration information) through the communication interface between the first AI function and the second AI function, and the first communication function and the second communication function exchange information (for example, conventional communication data) through the communication interface between the first communication function and the second communication function.

It should be further understood that, in embodiments of this application, the second-type communication interface represents the communication interface for the information exchange between the different functions in the communication apparatus, and a quantity of interfaces in the second-type communication interface is not limited. For example, the second-type communication interface includes one communication interface, and the different functions in the communication apparatus exchange information through the communication interface. For another example, the second-type communication interface includes a plurality of communication interfaces, and the different functions in the communication apparatus exchange information through different communication interfaces. For example, the communication apparatus includes four different functions that are respectively denoted as a function 1, a function 2, a function 3, and a function 4. There is a communication interface between the function 1 and the function 2, and there is also a communication interface between the function 3 and the function 4. The function 1 and the function 2 exchange information through the communication interface between the function 1 and the function 2, and the function 3 and the function 4 exchange information through the communication interface between the function 3 and the function 4. Without loss of generality, the following provides descriptions by using an example in which the AI function and the communication function in the communication apparatus use the second-type communication interface.

It should be further understood that, the first-type communication interface and the second-type communication interface may be interfaces corresponding to the communication apparatus, or may be interfaces corresponding to a communication apparatus group. This is not limited. For example, the first-type communication interface and the second-type communication interface included in the first communication apparatus may also be shared by another communication apparatus. For example, the first-type communication interface exists between communication apparatus groups. Each communication apparatus group includes one or more communication apparatuses, and each communication apparatus in the communication apparatus group can exchange AI collaboration information with a communication apparatus in another communication apparatus group through the first-type communication interface of the group to which the communication apparatus belongs.

It should be further understood that the interface (for example, the first-type communication interface and/or the second-type communication interface) in embodiments of this application may include a wire for a wired connection or a terminal and/or a pin coupled to a wireless transceiver for a wireless connection. In some embodiments, the interface may include a transmitter, a receiver, a transceiver, and/or an antenna. The interface may be configured to use any available protocol (such as a 3GPP standard) for communication between computer devices (such as a UE, a BS, and/or a network node).

Based on the system 500 shown in FIG. 5, that the communication apparatus includes two types of communication interfaces is defined, to support direct AI collaboration between communication apparatuses in a wireless network. This can implement overall optimization at a region level.

With reference to FIG. 4 and FIG. 5, the foregoing respectively describes the system usable in embodiments of this application. It should be understood that FIG. 4 and FIG. 5 may be used together, or may be used separately. This is not limited. For understanding, the following provides descriptions mainly by using an example in which FIG. 4 and FIG. 5 are used together. To be specific, the communication apparatus includes the AI function and the communication function, and includes the first-type communication interface and the second-type communication interface.

In embodiments of this application, a specific form of the communication apparatus is not limited. For example, the communication apparatus may be a communication device, a chip, or a chip system. This is not limited.

The foregoing plurality of communication apparatuses that participate in the AI optimization in FIG. 4 and FIG. 5 (for example, the first communication apparatus that performs AI optimization and the second communication apparatus that provides the AI collaboration information to collaborate with the first communication apparatus to perform AI optimization) may be communication apparatuses of a same type, or may be communication apparatuses of different types. This is not limited.

An example in which the communication apparatus is the communication device is used. For example, the first communication apparatus is a terminal device, and the second communication apparatus is a terminal device. For another example, the first communication apparatus is a network device, and the second communication apparatus is a network device. For another example, the first communication apparatus is a terminal device, and the second communication apparatus is a network device. For another example, the first communication apparatus is a terminal device or a network device, and the second communication apparatus is a central device. For another example, the first communication apparatus is a central device, and the second communication apparatus is a terminal device or a network device.

The central device represents a device at a region center (center), and may be a device or may be a function module deployed in the device (for example, an AI function deployed on the device). The central device may be an independent device, may be deployed in the terminal device, or may be deployed in a core network or an access network. This is not limited.

In embodiments of this application, an AI function may also be deployed at the region center. The AI function at the region center may be deployed in the core network (for example, an xCN), may be deployed in an access network device (for example, an xNB), or may be deployed in an independent device or the like. This is not limited.

For ease of understanding, the example in which the communication apparatus is the communication device is used below for description.

In the following, for brevity, an S-type interface represents an interface between AI functions in the communication device, and a C-type interface represents an interface between an AI function and a communication function in the communication device.

A wireless communication system generally includes a terminal device (for example, the UE described above), an access network (for example, the (R)AN described above), and a core network (for example, the xCN described above). For each device, refer to the foregoing descriptions. Details are not described herein again. Embodiments of this application may include three types of AI functions, namely, an AI function in the terminal device, an AI function in a network device (for example, a core device xNB of the (R)AN), and an AI function at the region center (namely, the central device described above). In the following, for differentiation and without loss of generality, an AI function #1 represents the AI function in the terminal device, an AI function #2 represents the AI function in the network device (for example, the core device xNB of the (R)AN), and an AI function #3 represents the AI function at the region center (namely, the central device described above).

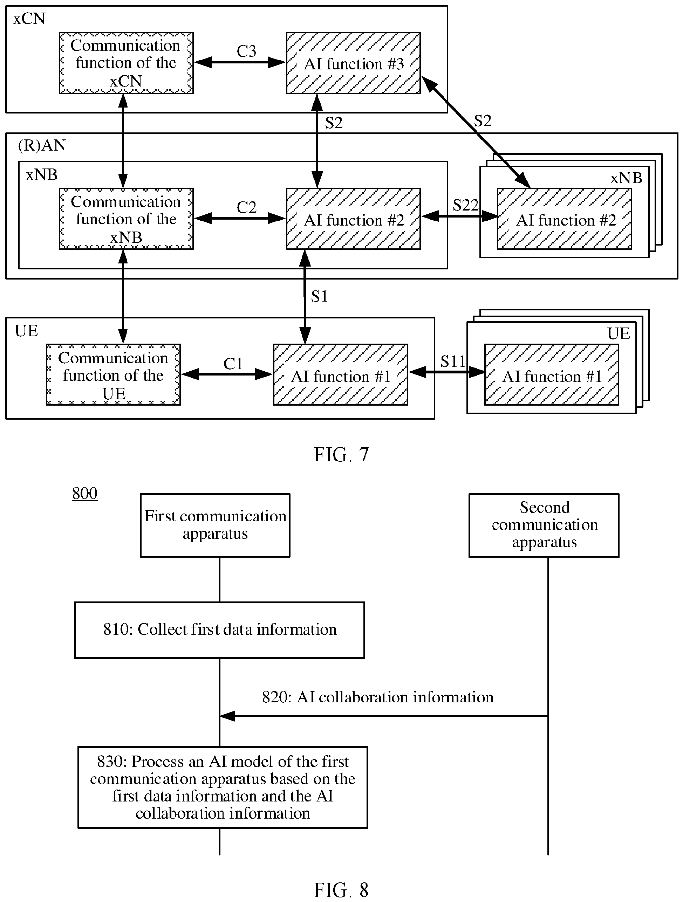

For ease of understanding, with reference to FIG. 6 and FIG. 7, the following enumerates schematic diagrams of model processing systems usable in embodiments of this application.

For example, FIG. 6 is a schematic diagram of a connection between two communication devices (for example, a first communication apparatus and a second communication apparatus) that is applicable to an embodiment of this application.

For differentiation, the two communication devices are respectively denoted as a device 1 and a device 2. The connection between the device 1 and the device 2 may be shown in FIG. 6. As shown in FIG. 6, each device may include an AI function and a communication function.

As shown in FIG. 6, a C-type interface represents an interface in the device, and the AI function may collect, through the C-type interface, data information (such as environment information) from the communication function of the device in which the AI function is located, to perform AI optimization. For example, an AI function and a communication function of the device 1 may exchange information through the C-type interface. An S-type interface represents an interface between devices, and may be configured to exchange AI collaboration information between the devices. For example, the AI function of the device 1 and an AI function of the device 2 may exchange information through the S-type interface. The following describes the AI collaboration information in detail with reference to the aspect 2.

As shown in FIG. 6, interfaces between the devices may further include a conventional communication interface in addition to the S-type interface. The conventional communication interface may be configured to exchange signaling and data information related to a communication connection service. For example, the communication function of the device 1 (in other words, another function of the device 1) and a communication function of the device 2 (in other words, another function of the device 2) may exchange information through the conventional communication interface. It should be understood that the conventional communication interface is merely a name for differentiation, and represents a communication interface.

Optionally, in embodiments of this application, a relationship may be defined for a plurality of communication devices (for example, the first communication apparatus and the second communication apparatus) participating in the AI optimization. In this way, different operations may be performed based on locations of the communication devices.

In a possible relationship, a superior-subordinate relationship (in other words, a primary-secondary relationship) may be defined for the plurality of communication devices, in other words, the plurality of communication devices may be in a peer relationship or a hierarchical relationship. The relationship between the communication devices may be determined based on types of the communication devices, may be determined based on positions of the communication devices in wireless communication (where for example, whether the communication device is in a controlling or managing position or is in a controlled or managed position), may be determined based on AI computing power of the communication devices, or may be determined based on another factor. This is not strictly limited.

FIG. 6 is used as an example. The device 1 and the device 2 may be in the peer relationship, or may be in the hierarchical relationship.

In a possible case, the device 1 and the device 2 are in the peer relationship.

In this case, the device 1 and the device 2 that are in the peer relationship may be devices of a same type, and there is no primary-secondary relationship between the devices. For example, both of the device 1 and the device 2 are UEs. For another example, both of the device 1 and the device 2 are xNBs.

In another possible case, the device 1 and the device 2 are in the hierarchical relationship.

In this case, the device 1 and the device 2 that are in the hierarchical relationship may be devices of different types, or there is a primary-secondary relationship between the devices. For example, the device 1 is a UE, and the device 2 is an xNB. For another example, the device 1 is an xNB, and the device 2 is an xCN.

Alternatively, when there is a primary-secondary relationship between devices of a same type, the primary-secondary relationship may be the hierarchical relationship. For example, both of the device 1 and the device 2 are UEs, the device 2 is a primary device (namely, a device at an upper level, which may also be referred to as an upper-layer agent), the device 1 is a secondary device (namely, a device at a lower level, which may also be referred to as a lower-layer agent), and the device 1 is controlled or managed by the device 2. In the following, for brevity, the primary device represents the device at the upper level, and the secondary device represents the device at the lower level.

In embodiments of this application, in different relationships, AI collaboration information exchanged between devices may be different. For example, in the hierarchical relationship (where for example, the device 1 and the device 2 are in the hierarchical relationship), the primary device may serve as a role of aggregating AI collaboration information of connected secondary devices by default, to be specific, become a central node to streamline AI optimization at a region level. For another example, in the peer relationship (where for example, the device 1 and the device 2 are in the peer relationship), basic AI collaboration information may be exchanged between the devices, to help improve a possibility of AI optimization at a region level. Specifically, the following provides detailed descriptions with reference to the aspect 2.

For example, FIG. 7 is another schematic diagram of a connection between communication devices that is applicable to an embodiment of this application.

A wireless communication system generally includes a terminal device (for example, a UE shown in FIG. 7), an access network (for example, a (R)AN shown in FIG. 7), and a core network (for example, an xCN shown in FIG. 7). A core device of the access network (R)AN is, for example, an xNB, and the xNB may provide a communication service of a conventional base station and an Al collaboration information service for a plurality of terminal devices (for example, UEs). The core network xCN may provide a function, for example, session management, mobility management, or policy management, of a conventional core network, and may further provide an AI collaboration information service of a region center. For example, when an Al function (namely, an AI function #3) of the region center is deployed in the xCN, the core network xCN may provide the AI collaboration information service of the region center.

An AI function collects, through a C-type interface, environment information from a communication function of a device in which the AI function is located. For differentiation, C-type interfaces in different devices are respectively denoted as a C 1 interface, a C2 interface, and a C3 interface. As shown in FIG. 7, for example, an AI function #1 of the UE may obtain environment information from a communication function of the UE (in other words, another function of the UE) through the C1 interface. For another example, an AI function #2 of the xNB may obtain environment information from a communication function of the xNB (in other words, another function of the xNB) through the C2 interface. For another example, the AI function #3 of the xCN may obtain environment information from a communication function of the xCN (in other words, another function of the xCN) through the C3 interface. For example, in addition to obtaining the environment information from the communication function of the xCN, the AI function #3 may further obtain the environment information from a network operation and maintenance system (for example, an OAM).

The AI functions exchange AI collaboration information through an S-type interface. For differentiation, an S-type interface between AI functions #1 is denoted as an S11 interface, an S-type interface between the AI function #1 and the AI function #2 is denoted as an S1 interface, an S-type interface between AI functions #2 is denoted as an S22 interface, and an S-type interface between the AI function #2 and the AI function #3 is denoted as an S2 interface. As shown in FIG. 7, for example, the AI functions #1 of the UEs may exchange AI collaboration information through the S11 interface. For another example, the AI function #1 of the UE and the AI function #2 of the xNB may exchange AI collaboration information through the S1 interface. For another example, the AI functions #2 of the xNBs may exchange AI collaboration information through the S22 interface. For another example, the AI function #2 of the xNB and the AI function #3 of the xCN may exchange AI collaboration information through the S2 interface.

It should be understood that the S-type interfaces such as the S1 interface and the S11 interface may be defined and implemented separately or together. A specific implementation does not limit the protection scope of embodiments of this application.

It should be further understood that, the S-type interfaces in FIG. 7 are merely examples for description. This is not limited. For example, there may also be an S-type interface between the AI function #1 and the AI function #3.

It should be further understood that in FIG. 7, the example in which the AI function (namely, the AI function #3) of the region center is deployed in the xCN is used. This is not limited.

It should be further understood that FIG. 6 and FIG. 7 are merely examples for description, and a specific form of the architecture is not limited. Any solution in which the AI collaboration information can be exchanged between the communication devices or the information can be exchanged between the different functions in the communication device is applicable to embodiments of this application. For example, there is an S-type interface between communication device groups, and each communication device group includes one or more communication devices. A communication device group 1 and a communication device group 2 are used as an example. When a communication device in the communication device group 1 exchanges AI collaboration information with a communication device in the communication device group 2, the AI collaboration information may be exchanged through an S-type interface between the communication device group 1 and the communication device group 2.

With reference to FIG. 4 to FIG. 7, the foregoing describes the model processing system provided in embodiments of this application. The following describes a model processing method provided in embodiments of this application. It should be understood that solutions of the aspects 1 and 2 may be separately used, or may be used in combination. Using an example in which the solutions of the aspects 1 and 2 are used in combination, a basic AI information collaboration platform capability is provided for each communication apparatus (for example, the terminal device and various network devices) through the system architecture shown in the aspect 1. Based on such an AI information collaboration platform capability, various communication apparatuses (such as the terminal device and various network devices) can transmit the AI collaboration information to each other, thereby forming a regional AI optimization policy and implementing the overall optimization at the region level.

In the aspect 2, with reference to FIG. 8 to FIG. 14, the model processing method provided in embodiments of this application is described.

FIG. 8 is a schematic diagram of a model processing method according to an embodiment of this application. The method 800 may include the following steps.

810: A first communication apparatus collects first data information.

Data information may be, for example, environment information such as data information collected by the first communication apparatus from a communication environment in which the first communication apparatus is located. By way of example rather than limitation, the data information may include but is not limited to, for example, state parameters such as CSI, power consumption, and an air interface resource.

820: The first communication apparatus receives AI collaboration information from a second communication apparatus.

The AI collaboration information is mentioned in embodiments of this application for a plurality of times. The AI collaboration information may also be referred to as AI information, and indicates that when a specific communication apparatus performs AI optimization, one or more other communication apparatuses provide some information, to collaborate with the communication apparatus to perform AI optimization. The information provided by the one or more other communication apparatuses may be denoted as the AI collaboration information. The one or more other communication apparatuses may be considered as one or more communication apparatuses that participate in the AI optimization. The one or more other communication apparatuses may be one or more communication apparatuses around the communication apparatus that performs AI optimization or one or more communication apparatuses in a logical relationship (in other words, a communication relationship) with the communication apparatus that performs AI optimization. For example, the one or more other communication apparatuses have a communication connection to the communication apparatus that performs AI optimization.

Using the first communication apparatus as an example, the first communication apparatus receives the AI collaboration information from the second communication apparatus, and the AI collaboration information of the second communication apparatus may be for collaborating with the first communication apparatus to perform AI optimization. In other words, the first communication apparatus performs AI optimization based on the data information collected by the first communication apparatus and the AI collaboration information provided by the second communication apparatus.

Optionally, the AI collaboration information sent by the second communication apparatus may include data information collected by the second communication apparatus and/or information related to AI model processing of the second communication apparatus.

By way of example rather than limitation, the information related to the AI model processing of the second communication apparatus includes one or more of the following: semantic information obtained through the AI model processing of the second communication apparatus, action information of the second communication apparatus, reward information obtained through action execution by the second communication apparatus, reward information predicted by the second communication apparatus, and preset target information of the second communication apparatus, where the preset target information of the second communication apparatus includes one or more of the following information: an energy saving target, a quality of service target, a reliability target, and the like of the second communication apparatus. Specifically, the following provides detailed descriptions.

A trigger condition for the second communication apparatus to send the AI collaboration information to the first communication apparatus is not limited. For example, the second communication apparatus may periodically send the AI collaboration information to the first communication apparatus. For another example, the second communication apparatus may send the AI collaboration information to the first communication apparatus after receiving a request of the first communication apparatus.

830: The first communication apparatus processes an AI model of the first communication apparatus based on the first data information and the AI collaboration information.

The processing an AI model may include at least: performing AI model learning and/or inference, in other words, performing AI model optimization and/or updating. In embodiments of this application, for brevity, the processing an AI model is uniformly indicated by the AI optimization.

The AI collaboration information sent by the second communication apparatus may be used for one or more types of AI learning algorithms.

According to the foregoing technical solution, when performing AI optimization, the communication apparatus may implement AI optimization at a region level through collaboration of another communication apparatus. For example, the communication apparatus may implement overall AI optimization at the region level based on both the data information collected by the communication apparatus and the AI collaboration information collected from the another communication apparatus.

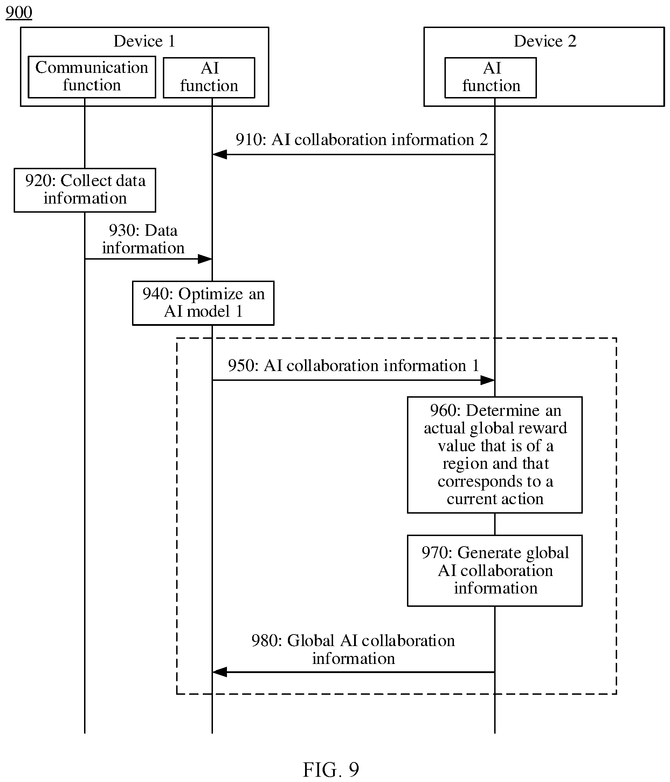

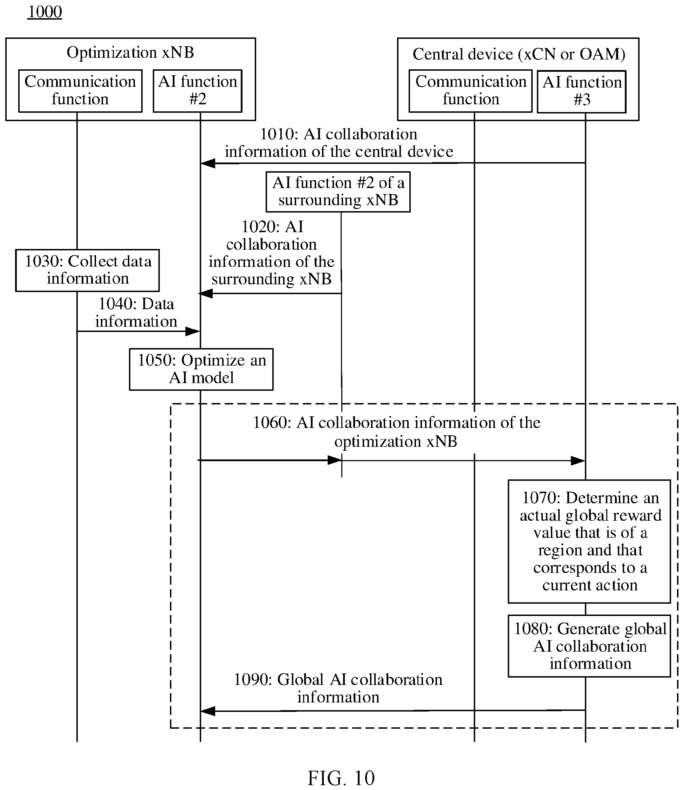

In a possible implementation, the first communication apparatus may further send, to the second communication apparatus, semantic information obtained through the AI model processing of the first communication apparatus and/or a result of the AI model processing of the first communication apparatus. This can implement better global optimization at the region level. Specifically, the following provides descriptions with reference to examples in FIG. 9 and FIG. 10.

In a possible implementation, the first communication apparatus and the second communication apparatus may be the first communication apparatus and the second communication apparatus described above.

For example, the first communication apparatus includes a first-type communication interface (namely, an S-type interface) and/or a second-type communication interface (namely, a C-type interface). The first communication apparatus may receive the AI collaboration information from the second communication apparatus through the S-type communication interface. For example, a first AI function of the first communication apparatus may receive the AI collaboration information from a second AI function of the second communication apparatus through the S-type communication interface. The data information may be transmitted between different functions in the first communication apparatus through the C-type interface. For example, the data information may be transmitted between the first AI function and a first communication function in the first communication apparatus through the C-type interface.

For the first communication apparatus and the second communication apparatus, refer to the foregoing descriptions in FIG. 4 to FIG. 7. Details are not described herein again.

By way of example rather than limitation, the AI collaboration information sent by the communication apparatus (for example, the second communication apparatus described above) may include one or more of the following information: state (state) information of the communication apparatus, decision (action) information of the communication apparatus, reward (reward) information obtained through action execution by the communication apparatus, reward information predicted by the communication apparatus, and target (target) information of the communication apparatus.
(1) The state information of the communication apparatus may include at least two types: data information collected from an environment and semantic information obtained through AI model processing. For differentiation, the data information collected from the environment is denoted as state1, and the semantic information obtained through the AI model processing is denoted as state2. By way of example rather than limitation, state1 may include but is not limited to, for example, state parameters such as CSI, power consumption, and an air interface resource. state2 represents multidimensional array information, such as gradient information and prediction information, obtained by performing the AI model processing of the communication apparatus on state1.
(2) The action information of the communication apparatus may be, for example, information about an action executed by an AI function of the communication apparatus based on a current state and a previous action. For example, for a terminal device, the action may be a specific action taken on the terminal device, and may include but is not limited to, for example, operations such as screen brightness setting, performance parameter setting, and communication parameter setting.
   Generally, in a hierarchical collaboration scenario, a secondary device (which may also be referred to as a lower-layer agent) may report, to a primary device (which may also be referred to as an upper-layer agent), current locally-observed state information and an action of the secondary device (namely, state information observed by the secondary device and an action of the secondary device), and the primary device may return a training gradient of an action value function to the secondary device, to enable the secondary device to update and reinforce the learned action value function. The primary device may transfer global state information and global action information to the secondary device, so that action information of the secondary device is global to some extent.
(3) The reward information obtained through the action execution by the communication apparatus represents reward information obtained after the communication apparatus executes a specific action, and indicates a real observed value. A network device is used as an example. The reward information may be, for example, reward information obtained after the network device executes a specific action under an indication by an AI function, and includes scheduling, handover, access control, and the like. Real reward information may also be referred to as, for example, an instant reward, also referred to as an immediate reward.
(4) The reward information predicted by the communication apparatus represents reward information predicted after the communication apparatus executes a current action, and indicates a predicted value of an AI algorithm. The predicted reward information may also be referred to as, for example, a long-term cumulative reward, also referred to as a long-term cumulative reward.
(5) The target information of the communication apparatus represents an optimization target of the communication apparatus. For example, for an AI function #3 of a region center, the target information may include an energy saving target, a quality of service target, a reliability target, and the like of the region center, or may include embedding (embedding) information of information such as a state or a behavior of the AI function #3 of the region center.

The foregoing briefly enumerates possible types of the AI collaboration information, and this is not limited. Any information that can be for collaborating with a specific communication apparatus to perform AI optimization and further implement regional optimization is applicable to embodiments of this application.

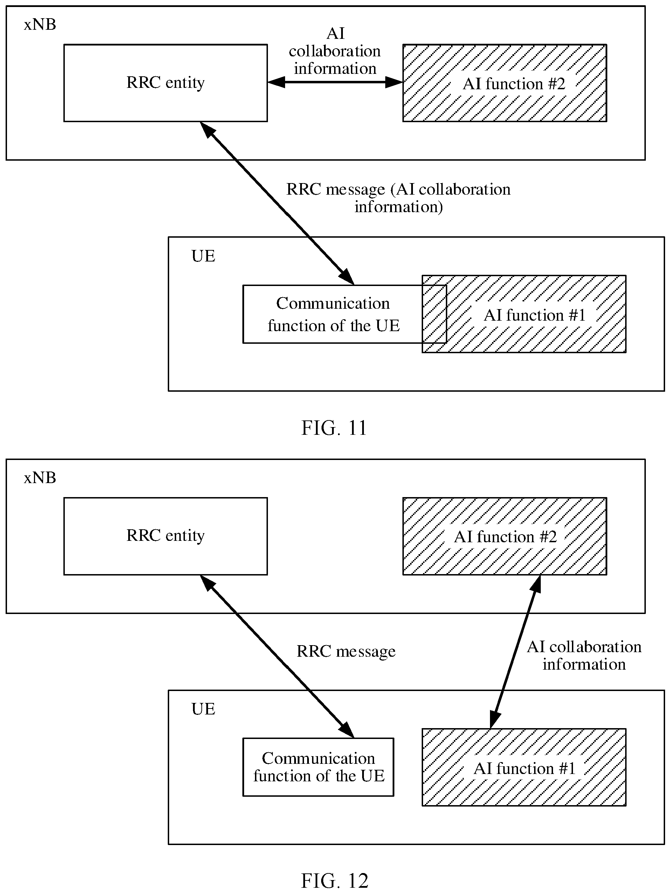

Optionally, the AI collaboration information may be transmitted by using control plane signaling or user plane signaling. This is not limited. Specifically, the following provides descriptions with reference to FIG. 11 to FIG. 14.

The following uses an example in which the communication apparatus is a communication device, to enumerate, with reference to different scenarios, collaboration procedures applicable to embodiments of this application.

FIG. 9 is a schematic diagram of a model processing method applicable to an embodiment of this application. By way of example rather than limitation, the method 900 shown in FIG. 9 may be applied to a procedure for exchanging AI collaboration information between a plurality of communication devices. The method 900 is mainly described by using interaction between a device 1 and a device 2 as an example. The device 1 and the device 2 are, for example, the device 1 and the device 2 shown in FIG. 6.

For differentiation, AI collaboration information sent by the device 1 to the device 2 is denoted as AI collaboration information 1, AI collaboration information sent by the device 2 to the device 1 is denoted as AI collaboration information 2, an AI model of the device 1 is denoted as an AI model 1, and an AI model of the device 2 is denoted as an AI model 2.

The device 1 and the device 2 may be in a peer relationship, or may be in a hierarchical relationship.

In the peer relationship, AI functions of the devices may exchange one or more of the following information through an S-type interface: state information (for example, state1 and/or state2) of the device, action information of the device, reward information obtained through action execution by the device, reward information predicted by the device, and target information of the device. AI information of the peer device is exchanged to optimize the AI model in the device and improve a possibility of making the AI model as an optimal model in a region.

The following mainly describes the hierarchical relationship with reference to the method 900. The peer relationship is in a similar case, and details are not described herein again.

It is assumed that the device 2 is a primary device and the device 1 is a secondary device. For example, the device 1 is a UE, and the device 2 is an xNB, where the xNB may be connected to one or more UEs. For another example, the device 1 is an xNB, and the device 2 is an xCN, where the xCN may be connected to one or more xNBs. For still another example, both of the device 1 and the device 2 are UEs, the device 2 is a primary device, the device 1 is a secondary device, and the device 1 is controlled or managed by the device 2.

The method 900 may include the following steps.

910: The device 2 sends the AI collaboration information 2 to the device 1.

For example, an AI function of the device 2 sends the AI collaboration information 2 to the device 1 through an S-type interface.

By way of example rather than limitation, the AI collaboration information 2 may include one or more of the following information: state information of the device 2, action information of the device 2, reward information obtained through action execution by the device 2, and target information of the AI function 2 of the device 2.

In an example, the device 2 may send state1 and/or state2 to the device 1, so that state1 and/or state2 may be referenced when the device 1 optimizes the AI model 1, to optimize the AI model by exchanging the AI collaboration information of a surrounding device (namely, the device 2), to improve the possibility of making the AI model as the optimal model in the region.

920: A communication function of the device 1 collects data information.

Before the device 1 performs AI optimization, the communication function of the device 1 may collect the data information, namely, environment information or current environment observation information, for example, state1.

930: The communication function of the device 1 sends the data information to an AI function of the device 1.

In a possible implementation, the communication function of the device 1 sends the data information, namely, state1, to the AI function of the device 1 through a C-type interface. In a process of processing state1, the AI function of the device 1 generates state2, namely, semantic information, to represent a basic state of the device 1. For example, state2 represents multidimensional array information obtained by performing AI model 1 processing of the device 1 on state 1.

940: The device 1 optimizes the AI model 1.

That a device optimizes an AI model means that the device performs AI model learning and/or inference, in other words, the device performs AI model optimization, updating, and/or the like.

In this embodiment of this application, information referenced when the device optimizes the AI model may include data information collected by the device and AI collaboration information sent by another device. For example, the device 1 may optimize the AI model 1 based on the data information collected by the device 1 and with reference to the AI collaboration information 2 sent by the device 2.

The AI function of the device 1 forms an action based on the AI collaboration information 2, state1 collected by the device 1, and the AI model 1 of the device 1. The AI function of the device 1 may further feed back the action to the communication function of the device 1.

The device 1 may further predict a reward value that is based on the current action. For differentiation, in this embodiment of this application, the reward value predicted by the device based on the current action is denoted as R1. For example, R1 may be a predicted value of an AI algorithm.

According to step 910 to step 940, the AI function of the device 1 may optimize the AI model 1.

Optionally, the method 900 may further include steps 950 to 980, so that the AI function of the device 1 performs a further optimization process of the AI model 1, to implement better global optimization at a region level.

950: The device 1 sends the AI collaboration information 1 to the device 2.

For example, the AI function of the device 1 sends the AI collaboration information 1 to the device 2 through the S-type interface.

By way of example rather than limitation, the AI collaboration information 1 sent by the device 1 to the device 2 may include one or more of the following information: state information of the device 1, action information of the device 1, and reward information predicted by the device 1. The state information of the device 1 may include, for example, state1 collected by the device 1 and/or state2 generated by the device 1 in a process of processing state1. The action information of the device 1 may include, for example, the action formed in step 940. The reward information predicted by the device 1 is the reward value R1 that is based on the current action and that is predicted by the device 1 in step 940.

960: The AI function of the device 2 determines an actual global reward value that is of the region and that corresponds to the current action.

For differentiation, in this embodiment of this application, the actual global reward value, determined by the device, that is of the region and that corresponds to the action is denoted as R2.

The AI function of the device 2 may observe that the actual global reward value brought by the current action of the device 1 to the region is R2. In a possible implementation, the AI function of the device 2 may collect the R2 information from a communication function of the device 2.

For example, it is assumed that the device 2 is a network device, and the device 1 is a terminal device. For the network device, R2 may be reward information obtained by the network device based on a specific action executed by the terminal device, and for example, may include scheduling, handover, access control, or the like.

970: The device 2 generates global AI collaboration information.

The device 2 may aggregate AI collaboration information of one or more secondary devices belonging to the device (namely, the device 2). For example, the device 2 may receive the AI collaboration information of the one or more secondary devices belonging to the device (namely, the device 2). For example, the AI collaboration information of the secondary device aggregated by the device 2 may include but is not limited to state2 generated by the secondary device, an action formed by the secondary device, and a reward value R1 predicted by the secondary device.

The device 2 forms a predicted global reward value (denoted as R3 for differentiation) based on the AI collaboration information of the one or more secondary devices belonging to the device (namely, the device 2), and performs supervised training on the AI model 2 by using the actual global reward value R2 of the region. The device 2 optimizes the AI model 2 based on the AI collaboration information collected from the one or more secondary devices, to generate the global AI collaboration information (for example, gradient information output through training of the AI model 2).

980: The device 2 sends the global AI collaboration information to the device 1.

The device 2 may send the global AI collaboration information to each secondary device, so that each secondary device can further optimize an AI model of the secondary device. The global AI collaboration information includes, for example, the gradient information output through the training on the AI model 2.

For example, the AI function of the device 2 sends the global AI collaboration information, for example, the gradient information output through the training of the AI model 2, to the device 1 through the S-type interface. The AI function of the device 1 corrects, in other words, optimizes the AI model 1 based on the received gradient information, so that after multiple rounds of correction, the AI model 1 gradually converges to execute a better action optimal to the region instead of an individual.

With reference to steps 910 to 980 shown in FIG. 9, the foregoing describes an example of the possible procedure for exchanging AI collaboration information between a plurality of devices. For example, the procedure is applicable to a scenario in which collaboration is performed between hierarchical devices. It should be understood that the foregoing steps are merely examples for description. This is not strictly limited. In addition, sequence numbers of the foregoing processes do not mean execution sequences. The execution sequences of the processes should be determined according to functions and internal logic of the processes, and should not be construed as any limitation on implementation processes of embodiments of this application. For example, step 910 and step 920 may be simultaneously performed; step 920 is performed first, and then step 910 is performed; or step 910 is performed first, and then step 920 is performed. For another example, step 920 and step 930 may be simultaneously performed.

According to the foregoing technical solution, when a specific communication device performs AI optimization, overall AI optimization at a region level may be implemented based on both data information collected by the communication device and AI collaboration information collected from another communication device.

FIG. 10 is a schematic diagram of a model processing method applicable to another embodiment of this application. By way of example rather than limitation, the method 1000 shown in FIG. 10 may be applied to a procedure in which a plurality of communication devices (for example, xNBs) learn a global optimization model under streamlining by a central device. As shown in FIG. 10, the method 1000 is mainly described by using interaction between the xNB (denoted as an optimization xNB for differentiation) and a central device (for example, an xCN or an OAM) as an example. The method 1000 may include the following steps.

1010: An AI function #2 of the optimization xNB receives AI collaboration information from an AI function #3 of the central device, where the AI collaboration information is denoted as AI collaboration information of the central device for differentiation.

The AI function #2 of the optimization xNB receives, through an S interface, AI collaboration information sent by the AI function #3 of the central device and an AI function #2 of a surrounding xNB.

The architecture shown in FIG. 7 is used as an example. The AI function #3 of the central device sends the AI collaboration information to the AI function #2 of the optimization xNB through an S2 interface.

The AI collaboration information sent by the AI function #3 of the central device to the AI function #2 of the optimization xNB may include but is not limited to, for example, target information of the central device.

1020: The AI function #2 of the optimization xNB receives the AI collaboration information from the AI function #2 of the surrounding xNB, where the AI collaboration information is denoted as AI collaboration information of the surrounding xNB for differentiation.

The surrounding xNB may be understood as an xNB in a logical relationship (for example, a communication relationship) with the optimization xNB, in other words, an xNB in a specific communication range.

The architecture shown in FIG. 7 is used as an example. The AI function #2 of the surrounding xNB sends the AI collaboration information to the AI function #2 of the optimization xNB through an S22 interface.

The AI collaboration information sent by the AI function #2 of the surrounding xNB to the AI function #2 of the optimization xNB may include but is not limited to, for example, state information (for example, state1 and/or state2) of the surrounding xNB, action information of the surrounding xNB, reward information obtained through action execution by the surrounding xNB, reward information predicted by the surrounding xNB, and target information of the surrounding xNB.

1030: A communication function of the optimization xNB collects data information.

Before the optimization xNB performs AI optimization, the communication function of the optimization xNB may collect the data information, namely, environment information or environment observation information of a current round, for example, state1.

1040: The communication function of the optimization xNB sends the data information to the AI function #2 of the optimization xNB.

In a possible implementation, the communication function of the optimization xNB sends the data information, namely, state1, to the AI function #2 of the optimization xNB through a C-type interface. In a process of processing state1, the AI function #2 of the optimization xNB generates state2, namely, semantic information, to represent a basic state of the optimization xNB. For example, state2 represents multidimensional array information obtained by performing AI model processing of the optimization xNB on state1.

1050: The AI function #2 of the optimization xNB optimizes an AI model.

The AI function #2 of the optimization xNB optimizes the AI model with reference to the AI collaboration information sent by the AI function #3 of the central device, the AI collaboration information sent by the AI function #2 of the surrounding xNB, and the data information collected by the optimization xNB.

The AI function #2 of the optimization xNB forms an action based on the AI collaboration information sent by the AI function #3 of the central device and the AI function #2 of the surrounding xNB and collected state1 and the AI model of the optimization xNB. The AI function #2 of the optimization xNB may further feed back the action to the communication function of the optimization xNB. The optimization xNB may further predict a reward value R1 that is based on the current action.

According to step 1010 to step 1050, the AI function #2 of the optimization xNB may optimize the AI model.

Optionally, the method 1000 may further include steps 1060 to 1090, so that the AI function #2 of the optimization xNB performs a further optimization process of the AI model, to implement better global optimization at a region level.

1060: The AI function #2 of the optimization xNB sends generated AI collaboration information to the AI function #3 of the central device and the AI function #2 of the surrounding xNB, where the generated AI collaboration information is denoted as AI collaboration information of the optimization xNB for differentiation.

The AI collaboration information sent by the AI function #2 of the optimization xNB to the AI function #3 of the central device may be the same as or different from the AI collaboration information sent by the AI function #2 of the optimization xNB to the AI function #2 of the surrounding xNB. This is not limited.

In an example, the AI collaboration information sent by the AI function #2 of the optimization xNB to the AI function #3 of the central device may be the same as the AI collaboration information sent by the AI function #2 of the optimization xNB to the AI function #2 of the surrounding xNB. By way of example rather than limitation, the AI collaboration information sent by the optimization xNB may include one or more of the following information: state information of the optimization xNB, action information of the optimization xNB, reward information predicted by the optimization xNB, and target information of the optimization xNB. The state information of the optimization xNB may include, for example, state1 collected by the optimization xNB and/or state2 generated by the optimization xNB in the process of processing state1. The action information of the optimization xNB may include, for example, the action formed in step 1050. The reward information predicted by the optimization xNB is the reward value R1 that is based on the current action and that is predicted by the optimization xNB in step 1050.

In another example, the AI function #2 of the optimization xNB may separately send the AI collaboration information to the AI function #3 of the central device and the AI function #2 of the surrounding xNB.

For example, the AI collaboration information sent by the AI function #2 of the optimization xNB to the AI function #3 of the central device may include but is not limited to, for example, state2 generated by the optimization xNB in the process of processing state1, action information of the optimization xNB, and reward information predicted by the optimization xNB.

For another example, the AI collaboration information sent by the AI function #2 of the optimization xNB to the AI function #2 of the surrounding xNB may include but is not limited to, for example, state1 collected by the optimization xNB, state2 generated by the optimization xNB in the process of processing state1, the action information of the optimization xNB, the reward information predicted by the optimization xNB, and target information of the optimization xNB.

The architecture shown in FIG. 7 is used as an example. The AI function #2 of the optimization xNB sends the AI collaboration information to the AI function #3 of the central device through the S2 interface, and sends the AI collaboration information to the AI function #2 of the surrounding xNB through the S22 interface.

1070: The AI function #3 of the central device determines an actual global reward value R2 that is of a region and that corresponds to the current action.

The AI function #3 of the central device observes that the actual global reward value that is of the region and that corresponds to the current action is R2. In a possible implementation, the AI function #3 of the central device may collect the R2 information from a communication function of the central device. For example, the AI function #3 collects the R2 information from a communication function of the xCN or the OAM.

1080: The AI function #3 of the central device generates global AI collaboration information.

The AI function #3 of the central device may aggregate AI collaboration information of one or more secondary devices (for example, the optimization xNB and the surrounding xNB) belonging to the central device, optimize an AI model of the central device, form a predicted global reward value R3, and perform supervised training on the AI model of the central device by using actual global R2 of the region.

For example, the AI collaboration information of the secondary device aggregated by the AI function #3 of the central device may include but is not limited to state2 generated by the secondary device, an action formed by the secondary device, and a reward value predicted by the secondary device. For example, the AI function #3 of the central device receives information such as state2, the action, and the predicted reward value R1 from the AI function #2 of the optimization xNB.

The AI function #3 of the central device optimizes the AI model of the central device based on the AI collaboration information collected from the one or more secondary devices, to generate the global AI collaboration information (for example, gradient information output through training).

1090: The AI function #3 of the central device sends the global AI collaboration information to the AI function #2 of the optimization xNB.

The global AI collaboration information includes, for example, the gradient information output through training on the AI model of the central device.

The AI function #3 of the central device may send the global AI collaboration information to each secondary device, for example, the AI function #2 of the optimization xNB and the AI function #2 of the surrounding xNB, so that each secondary device can further optimize an AI model of the secondary device.

For example, the AI function #3 of the central device sends the global AI collaboration information, for example, the gradient information output through the training on the AI model of the central device, to the AI function #2 of the optimization xNB through the S-type interface (for example, the S2 interface). The AI function #2 of the optimization xNB corrects, in other words, optimizes the AI model based on the received gradient information, so that after multiple rounds of correction, the AI model gradually converges to execute a better action optimal to the region instead of an individual.

With reference to steps 1010 to 1090 shown in FIG. 10, the foregoing describes an example of the possible procedure in which the plurality of xNBs learn the global optimization model under the streamlining by the central device. It should be understood that the foregoing steps are merely examples for description. This is not strictly limited. In addition, sequence numbers of the foregoing processes do not mean execution sequences. The execution sequences of the processes should be determined according to functions and internal logic of the processes, and should not be construed as any limitation on implementation processes of embodiments of this application. For example, step 1010 and step 1020 may be simultaneously performed; step 1010 is performed first, and then step 1020 is performed; or step 1020 is performed first, and then step 1010 is performed. For another example, step 1030 and step 1010, or step 1030 and step 1020 may be simultaneously performed.

It should be understood that the AI function #3 of the central device may be deployed in the xCN or the OAM, or may be independently deployed. This is not limited.

With reference to FIG. 9 and FIG. 10, the foregoing describes the collaboration procedure applicable to embodiments of this application. It should be understood that the foregoing is merely examples for description. This is not limited.

With reference to FIG. 11 to FIG. 14, the following describes two possible manners of transmitting AI collaboration information.

### Manner 1: Control-plane transmission

In an example, FIG. 11 is a schematic diagram of exchange that is of AI collaboration information by using control plane signaling and that is applicable to an embodiment of this application. As shown in FIG. 11, the AI collaboration information is transmitted between an AI function #1 of a UE and an AI function #2 of an xNB by using an RRC message. In this manner, a direct interface (for example, an S1 interface) may not be disposed between the AI function #1 of the UE and the AI function #2 of the xNB.

In a possible implementation, the AI collaboration information is transmitted as a parameter of the RRC message. For example, a dedicated control message may be configured to transmit the AI collaboration information, and is denoted as, for example, AIInformation.

An uplink (uplink, UL) transmission case is used as an example. The AI function #1 of the UE may transmit the AI collaboration information to the AI function #2 of the xNB by using uplink AI information (ULAIInformation). ULAIInformation may include but is not limited to one or more of the following information: StateReport (StateReport), TargetReport (TargetReport), ActionReport (ActionReport), RewardReport (RewardReport), and ProbabilityReport (ProbabilityReport). The following briefly describes the information.
1. StateReport may include, for example, one or more of the following types of information: service state information, resource usage state information, radio channel state information, location information, a moving speed, a moving track, an RRC connection state of the UE, and context information preferred by the UE.
   (1) The service state information may include, for example, one or more of the following types of information: a running service, an average data rate, an average air interface transmission latency, a packet loss rate, a quality of experience (quality of experience, QoE) satisfaction level, and a traffic pattern (traffic pattern).
   (2) The resource usage state information may include, for example, one or more of the following types of information: a used computing resource, a used storage resource, and an air interface resource usage percentage.
   (3) The radio channel state information may include, for example, one or more of the following types of information: reference signal received power (reference signal received power, RSRP) that is of a serving cell and that is measured by the UE, reference signal received quality (reference signal received quality, RSRQ) that is of the serving cell and that is measured by the UE, uplink received interference measured by a network device (for example, the xNB or an integrated access and backhaul (integrated access and backhaul, IAB) node), and a downlink shared spectrum resource conflict probability measured by the network device (for example, the xNB or the IAB node).
   (4) The context information preferred by the UE (in other words, context information preferred by a user) may include, for example, one or more of the following types of information: a preference for a power saving mode, a preference for selecting a radio access technology (radio access technology, RAT), a preference for selecting an operator, and a preference for an AI working mode. The context information preferred by the UE may be set by the user that uses the UE. For example, the user may set one or more of the following content: the power saving mode, an operator network selection sequence, and a RAT selection sequence. The UE or a RAN node may set different preferences based on a change of device power of the UE or the RAN node.
2. TargetReport may include, for example, one or more of the following types of information: an energy saving target, a low-latency target, a high-reliability target, and a high-throughput target.
3. ActionReport may include, for example, one or more of the following types of information: state information observed by the terminal device, target information, some configuration suggestions of a physical (physical, PHY) layer, a media access control (media access control, MAC) layer, a radio link control (radio link control, RLC) layer, and a packet data convergence protocol (packet data convergence protocol, PDCP) layer that are obtained by using feedback information, and some configuration suggestions for an RRC status. The some configuration suggestions for the RRC status include, for example, being expected to be in an RRC connected state, being expected to be in an RRC inactive (RRCInactive) state, or being expected to be in an RRC idle (RRCidle) state.
4. RewardReport may include, for example, information about a reward value. In a possible design, the reward value is related to feedback information indicating a gap that is between a state of the terminal device and a target and that is caused by a network-side or terminal-device-side action executed by the terminal device. For example, if the action causes the state of the terminal device to be closer to the target (where for example, a state after the terminal device executes the action is closer to the preset energy saving target than a state before the action is executed), the reward value is positive; or if the action causes the state of the terminal device to be farther from the target (where for example, a state after the terminal device executes the action is farther from the preset energy saving target than a state before the action is executed), the reward value is negative. The reward value may be predefined in a protocol. For example, the reward value may be selected from -1024, -1022, -1020, ..., or +1020 based on an actual case. Alternatively, the reward value may be selected from -1.024, -1.022, -1.020, ..., or +1.0020 based on an actual case. It should be understood that a specific value of the reward value is not limited. For example, the network device may configure, for the UE by using a system message or a UE-level RRC message, a coefficient for reporting the reward value, and coefficients for reporting the reward value by different UEs may be the same or may be different. For example, coefficients of the reward value that are configured by the network device are as follows: A coefficient for a UE 1 is 1000, a coefficient for a UE 2 is 10000, and a coefficient for a UE 3 is 100.
5. ProbabilityReport may include, for example, a value of a probability corresponding to ActionReport generated by the AI function #2 of the terminal device. For example, the AI collaboration information may further include a plurality of pieces of ActionReport and ProbabilityReport.

It should be understood that StateReport, TargetReport, ActionReport, RewardReport, and ProbabilityReport are merely names for differentiation. Specific names of the information and specific names of messages for transmitting the foregoing information constitute no limitation on the protection scope of embodiments of this application.

For example, the following is a format of ULAIInformation.

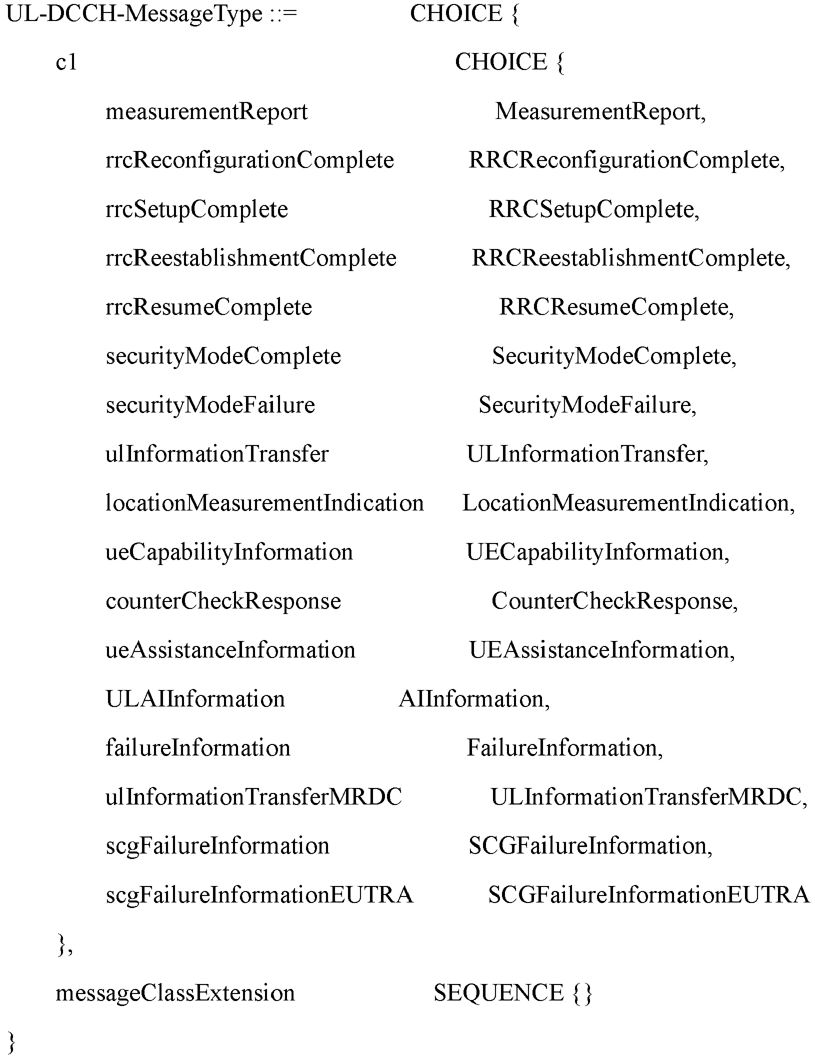

It should be understood that ULAIInformation may be an RRC message, or may be an information element (information element, IE), for example, ulInformationTransfer, defined in a specific uplink dedicated RRC message for transmission.

A downlink (downlink, DL) transmission case is used as an example. The AI function #2 of the xNB may transfer the AI collaboration information to the AI function #1 of the terminal device by using an RRC message. For example, an existing uplink RRC message may be reused for transmitting the AI collaboration information. For example, an IE for the AI collaboration information may be newly added to the corresponding uplink RRC message. For example, the IE of the AI collaboration information may include but is not limited to one or more of the following information: StateReport, TargetReport, ActionReport, RewardReport, and ProbabilityReport. For details, refer to the foregoing descriptions. Details are not described herein again.

In the manner 1, communication devices may exchange the AI collaboration information by using control plane signaling. For example, existing control plane signaling may be reused, or control plane signaling dedicated to transmitting the AI collaboration information may be configured. This is not limited.

### Manner 2: User-plane transmission

In an example, FIG. 12 to FIG. 14 each are a schematic diagram of exchange that is of AI collaboration information by using user plane signaling and that is applicable to an embodiment of this application.

As shown in FIG. 12, a direct communication interface (for example, an S-type communication interface) is disposed between an AI function #1 of a UE and an AI function #2 of an xNB, and the AI collaboration information may be exchanged between the AI function #1 of the UE and the AI function #2 of the xNB through the direct communication interface.

Generally, a size of a PDCP service data unit (service data unit, SDU) is a fixed value. Using an example in which the size of the PDCP SDU is 9000 bytes, an RRC message is basically not split into a plurality of PDCP SDUs for transmission. Therefore, a size of RRC signaling is limited by 9000 bytes. Considering that the AI collaboration information may be greater than 9000 bytes, the AI collaboration information may be transmitted through a data plane, to be specific, the AI collaboration information is transmitted through the interface between the AI function #1 of the UE and the AI function #2 of the xNB.

In an example, a protocol data unit (protocol data unit, PDU) for the AI collaboration information (for example, denoted as an AI PDU) may include one or more AI subPDUs (subPDUs). For example, the AI PDU may include an AI information type (AIInfotype).

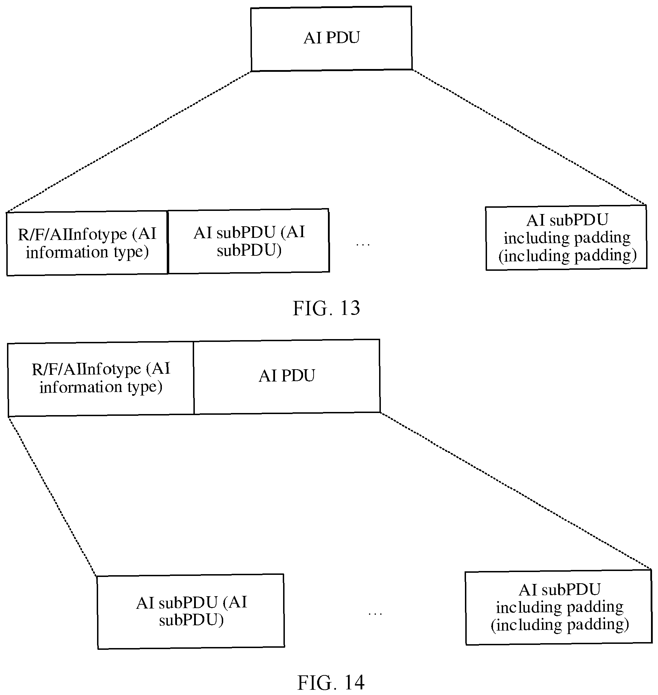

In a possible design, as shown in FIG. 13, AIInfotype may indicate a type of information transmitted in a subPDU carrying AIInfotype. For example, when AIInfotype=0, it indicates that the subPDU carrying AIInfotype is for transmitting StateReport information; when AIInfotype=1, it indicates that the subPDU carrying AIInfotype is for transmitting TargetReport information; when AIInfotype=2, it indicates that the subPDU carrying AIInfotype is for transmitting ActionReport information; when AIInfotype=3, it indicates that the subPDU carrying AIInfotype is for transmitting RewardReport information; when AIInfotype=5, it indicates that the subPDU carrying AIInfotype is for transmitting ProbabilityReport information.

In another possible design, as shown in FIG. 14, AIInfotype may indicate a type of information transmitted in the AI PDU. For example, when AIInfotype=00, it indicates that the AI PDU is for transmitting StateReport information; when AIInfotype=01, it indicates that the AI PDU is for transmitting TargetReport information; when AIInfotype=10, it indicates that the AI PDU is for transmitting ActionReport information; when AIInfotype=11, it indicates that the AI PDU is for transmitting RewardReport information.

It should be understood that the AI PDU or the subPDU may further include an R field and/or an F field. The R field represents a reserved (reserved, R) field, and the F field represents a field indicating a length of the AI PDU or the subPDU. For brevity, FIG. 13 and FIG. 14 each show only a case in which one field is R/F/AIInfotype. It should be understood that in actual communication, the AI PDU or the subPDU may include one or more of R, F, and AIInfotype.

It should be further understood that the foregoing several possible designs are merely examples for description. This is not limited. For example, one subPDU in the AIPDU may include AIInfotype, and AIInfotype may indicate a type of information transmitted in the AI PDU. For another example, the AI PDU or the subPDU may further include other information, where for example, the other information may be carried in the R field in FIG. 13 or FIG. 14.

It should be further understood that, when the AI collaboration information is exchanged by using the user plane signaling, an information format of carrying the AI collaboration information may be similar to the format shown in FIG. 13 or FIG. 14, or may be another format. Any format that enables the AI collaboration information to be transmitted by using the user plane signaling is applicable to embodiments of this application.

In the manner 2, communication devices may exchange the AI collaboration information by using the user plane signaling. For example, existing user plane signaling may be reused, or user plane signaling dedicated to transmitting the AI collaboration information may be configured. This is not limited.

The methods provided in embodiments of this application are described above in detail with reference to FIG. 8 to FIG. 14.

It should be understood that, in some of the foregoing embodiments, the collecting the data information is mentioned for a plurality of times, and may indicate obtaining the collected information, reading the data information, observing the data information, or the like. This is not limited. Any manner in which the communication apparatus can learn of the data information is applicable to embodiments of this application.

It should be further understood that in some of the foregoing embodiments, the AI model represents a model in an intelligent network. The intelligent network may be referred to as an intelligent module, a model, or a "black box", and may represent a network with a machine learning function, for example, an artificial intelligence network.

It should be further understood that in some of the foregoing embodiments, the AI optimization is mainly used as an example for description. This is not limited. The foregoing method may be used when AI learning, AI updating, AI inference, or the like is performed.

It should be further understood that in some of the foregoing embodiments, functions (such as the communication function and the AI function) are mainly used as examples for description. The function may be replaced with a module, a layer, a network, or the like.

According to the foregoing technical solutions, there is a specific logical collaboration relationship between the communication devices in the wireless network, where for example, the terminal device and the network device (for example, the base station) may communicate with each other. For another example, there is a specific logical collaboration relationship between network devices, where for example, the network devices may communicate with each other. This relationship is internal logic of the wireless network and does not disappear because of application of the AI. Therefore, an AI collaboration platform is provided. For example, the AI function and/or the communication interface (for example, the first-type communication interface and the second-type communication interface) may be defined in the communication device (the network device, the terminal device, and the like), so that AI capabilities of various communication apparatuses can be fully used to provide a basic AI information collaboration platform capability for the communication device, to support AI collaboration between various communication devices in the wireless network. In addition, before performing AI optimization (for example, performing AI model learning and inference), the communication device may exchange the AI collaboration information with a related device that is in the logical relationship with the communication device, so that an AI optimization effect of an individual device can be broken through, to achieve a balance between individual optimization and the overall optimization at the region level.

In addition, according to the foregoing technical solutions, multi-level collaboration can be supported, for example, multi-level collaboration between the terminal device, the network device, and the region center (namely, the central device) is supported. This is more applicable to a wireless communication scenario.

Embodiments described in FIG. 4 to FIG. 14 may be independent solutions, or may be combined based on internal logic. All these solutions fall within the protection scope of this application. For example, the aspect 2 (namely, the methods in FIG. 8 to FIG. 14) may be implemented based on the system architecture in the aspect 1 (namely, the architectures shown in FIG. 4 to FIG. 7).

It may be understood that, in the foregoing method embodiments, operations implemented by the communication device may alternatively be implemented by a component (for example, a chip or a circuit) that may be used in the communication device.

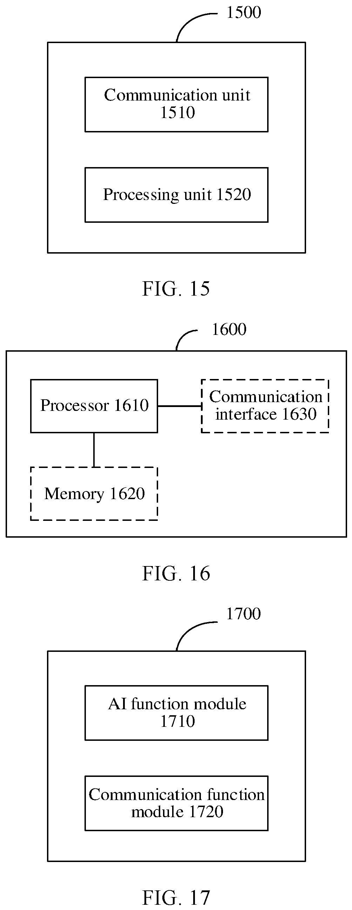

With reference to FIG. 15 to FIG. 18, the following describes in detail apparatuses provided in embodiments of this application. It should be understood that descriptions of apparatus embodiments correspond to the descriptions of the method embodiments. Therefore, for content that is not described in detail, refer to the foregoing method embodiments. For brevity, details are not described herein again.

As shown in FIG. 15, an embodiment of this application provides a model processing apparatus 1500. The apparatus 1500 is the first communication apparatus in FIG. 4 to FIG. 14. The apparatus 1500 may be configured to perform the method 800, the method 900, and the method 1000 in the foregoing embodiments. The apparatus 1500 includes a communication unit 1510 and a processing unit 1520.

In a possible implementation, the communication unit 1510 is configured to collect first data information. The communication unit 1510 is further configured to receive artificial intelligence AI collaboration information from a second communication apparatus. The processing unit 1520 is configured to process an AI model of the first communication apparatus based on the first data information and the AI collaboration information.

In an example, the communication unit 1510 includes a first-type communication interface and/or a second-type communication interface, where the first-type communication interface is configured to receive the AI collaboration information from the second communication apparatus, and the second-type communication interface is configured to transmit the first data information between different functions in the apparatus 1500.

In another example, the apparatus 1500 includes a first AI function and a first communication function, and the second communication apparatus includes a second AI function. The communication unit 1510 is specifically configured to receive the AI collaboration information from the second AI function through the first-type communication interface.

In another example, the apparatus 1500 includes the first AI function and the first communication function. The communication unit 1510 is specifically used by the first communication function to collect the first data information, and the first communication function sends the first data information to the first AI function through the second-type communication interface.

In another example, the communication unit 1510 is further configured to send, to the second communication apparatus, semantic information obtained through the AI model processing of the apparatus 1500 and/or a result of the AI model processing of the apparatus 1500.

In another example, the AI collaboration information includes: second data information collected by the second communication apparatus and/or information related to AI model processing of the second communication apparatus.

In another example, the information related to the AI model processing of the second communication apparatus includes one or more of the following: semantic information obtained through the AI model processing of the second communication apparatus, action information of the second communication apparatus, reward information obtained through action execution by the second communication apparatus, reward information predicted by the second communication apparatus, and preset target information of the second communication apparatus.

In another example, the preset target information of the second communication apparatus includes one or more of the following information: an energy saving target, a quality of service target, and a reliability target of the second communication apparatus.

In another example, the communication unit 1510 is specifically configured to: receive control plane signaling from the second communication apparatus, where the control plane signaling includes the AI collaboration information; or receive user plane signaling from the second communication apparatus, where the user plane signaling includes the AI collaboration information.

In another example, both the apparatus 1500 and the second communication apparatus are terminal devices; both the apparatus 1500 and the second communication apparatus are network devices; the apparatus 1500 is a terminal device, and the second communication apparatus is a network device; the apparatus 1500 is a terminal device or a network device, and the second communication apparatus is a central device; or the apparatus 1500 is a central device, and the second communication apparatus is a terminal device or a network device.

For example, when the apparatus 1500 provided in this embodiment of this application includes the first AI function and the first communication function, the communication unit 1510 may include one or more communication units. For example, the communication unit 1510 includes one communication unit, and both the first AI function and the first communication function perform communication through the communication unit. For another example, the communication unit 1510 includes two communication units, the first AI function corresponds to one communication unit, and the first communication function corresponds to the other communication unit. The first AI function performs communication through the communication unit corresponding to the first AI function, and the first communication function performs communication through the communication unit corresponding to the first communication function.

For example, a product implementation form of the apparatus 1500 provided in this embodiment of this application is program code that can run on a computer.

For example, the apparatus 1500 provided in this embodiment of this application may be a communication device, or may be a chip, a chip system, or a circuit used in the communication device. When the apparatus 1500 is the communication device, the communication unit 1510 may be a transceiver or an input/output interface, and the processing unit 1520 may be a processor. When the apparatus 1500 is the chip, the chip system, or the circuit used in the communication device, the communication unit 1510 may be an input/output interface, an interface circuit, an output circuit, an input circuit, a pin, a related circuit, or the like on the chip, the chip system, or the circuit; and the processing unit 1520 may be a processor, a processing circuit, a logic circuit, or the like.

As shown in FIG. 16, an embodiment of this application further provides a model processing apparatus 1600. The apparatus may be, for example, the communication apparatus described above. The apparatus 1600 includes a processor 1610. The processor 1610 is coupled to a memory 1620. The memory 1620 is configured to store a computer program or instructions. The processor 1610 is configured to execute the computer program or the instructions stored in the memory 1620, so that the methods in the foregoing method embodiments are performed.

Optionally, as shown in FIG. 16, the apparatus 1600 may further include the memory 1620.

Optionally, as shown in FIG. 16, the apparatus 1600 may further include a communication interface 1630. The communication interface 1630 is configured to perform data transmission with the outside, or may be configured to perform data transmission between different internal functions.

For example, the apparatus 1600 is configured to implement the method 800 in the embodiment shown in FIG. 8.

For another example, the apparatus 1600 is configured to implement the method 900 in the embodiment shown in FIG. 9.

For still another example, the apparatus 1600 is configured to implement the method 1000 in the embodiment shown in FIG. 10.

In an implementation process, the steps of the foregoing methods may be implemented by using an integrated logic circuit of hardware in the processor 1610 or instructions in a software form. The methods disclosed with reference to embodiments of this application may be directly performed by a hardware processor, or may be performed by using a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory 1620, and the processor 1610 reads information in the memory 1620 to implement the steps of the foregoing methods in combination with the hardware of the processor 1610. To avoid repetition, details are not described herein again.

It should be understood that, in embodiments of this application, the processor may be one or more integrated circuits, and is configured to execute a related program, to perform the method embodiments of this application.

The processor (for example, the processor 1610) may include one or more processors and is implemented as a combination of computing devices. The processor may include one or more of the following: a microprocessor, a microcontroller, a digital signal processor (digital signal processor, DSP), a digital signal processing device (digital signal processing device, DSPD), an application-specific integrated circuit (application-specific integrated circuit, ASIC), a field programmable gate array (field programmable gate array, FPGA), a programmable logic device (programmable logic device, PLD), gate logic, transistor logic, a discrete hardware circuit, a processing circuit, other appropriate hardware or firmware, and/or another appropriate combination of hardware and software, and is configured to perform various functions described in this disclosure. The processor may be a general-purpose processor or a special-purpose processor. For example, the processor 1610 may be a baseband processor or a central processing unit. The baseband processor may be configured to process a communication protocol and communication data. The central processing unit may be configured to enable the apparatus to execute a software program and process data in the software program. A part of the processor may further include a non-volatile random access memory. For example, the processor may further store information of a device type.

The program in this application represents software in a broad sense. A non-limitative example of the software includes program code, a program, a subprogram, instructions, an instruction set, code, a code segment, a software module, an application program, a software application program, or the like. The program may run in a processor and/or a computer, so that the apparatus performs various functions and/or processes described in this application.

The memory (for example, the memory 1620) may store data required by the processor (for example, the processor 1610) during software execution. The memory may be implemented by using any suitable storage technology. For example, the memory may be any available storage medium that can be accessed by the processor and/or the computer. A non-limitative example of the storage medium includes: a random access memory (random access memory, RAM), a read-only memory (read-only memory, ROM), an electrically erasable programmable read-only memory (electrically EPROM, EEPROM), a compact disc read-only memory (Compact Disc-ROM, CD-ROM), a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), a direct rambus random access memory (direct rambus RAM, DR RAM), a removable medium, an optical disc memory, a magnetic disk storage medium, a magnetic storage device, a flash memory, a register, a status memory, a remote mounted memory, a local or remote memory component, or any other medium capable of carrying or storing software, data, or information and accessible by the processor/computer. It should be noted that the memory described in this specification aims to include but is not limited to these memories and any memory of another appropriate type.

The memory (for example, the memory 1620) and the processor (for example, the processor 1610) may be separately disposed or integrated together. The memory may be configured to connect to the processor, so that the processor can read information from the memory, and store information in and/or write information into the memory. The memory may be integrated into the processor. The memory and the processor may be disposed in an integrated circuit (where for example, the integrated circuit may be disposed in a UE, a BS, or another network node).

According to some embodiments, various functions described in this application may be implemented by an apparatus (for example, the first communication apparatus), and the apparatus includes one or more modules, components, circuits, software, elements, and the like (collectively referred to as elements) configured to perform the functions. These elements may be implemented by hardware, software, firmware, and/or a combination thereof.

As shown in FIG. 17, an embodiment of this application further provides a model processing apparatus 1700. The apparatus 1700 may be configured to implement the methods in the embodiments shown in FIG. 8 to FIG. 14. The apparatus 1700 includes an AI function module 1710 and a communication function module 1720.

For example, product implementation forms of the AI function module 1710 and the communication function module 1720 are program code that can run on a computer.

For example, the AI function module 1710 and the communication function module 1720 may be integrated into a same chip, or may be separately disposed on different chips.

An embodiment of this application further provides a system. The system includes the first communication apparatus and/or the second communication apparatus described above.

An embodiment of this application further provides a computer-readable storage medium. The computer-readable storage medium stores program code executed by a device, and the program code is for performing the methods in the foregoing embodiments.

An embodiment of this application further provides a computer program product including instructions. When the computer program product runs on a computer, the computer is enabled to perform the methods in the foregoing embodiments.

An embodiment of this application further provides a chip, and the chip includes a processor and a communication interface. The processor reads, through the communication interface, instructions stored in a memory, to perform the methods in the foregoing embodiments.

Optionally, in an implementation, the chip may further include the memory. The memory stores the instructions. The processor is configured to execute the instructions stored in the memory. When the instructions are executed, the processor is configured to perform the methods in the foregoing embodiments.

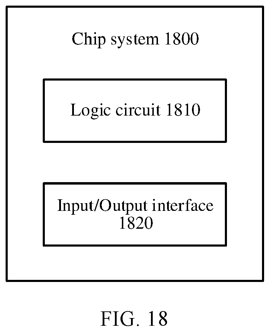

FIG. 18 is a schematic diagram of a chip system according to an embodiment of this application. The method 800, the method 900, or the method 1000 in the foregoing method embodiments may be implemented in the chip shown in FIG. 18.

The chip system 1800 shown in FIG. 18 includes a logic circuit 1810 and an input/output interface (input/output interface) 1820. The logic circuit is configured to couple to the input interface, and transmit data (for example, at least a part of a second channel model) parameters through the input/output interface, to perform the methods described in FIG. 8 to FIG. 14.

It should be understood that the term "and/or" in this specification describes only an association relationship between associated objects and represents that three relationships may exist. For example, A and/or B may represent the following three cases: Only A exists, both A and B exist, and only B exists. In addition, the character "/" in this specification generally indicates an "or" relationship between associated objects.

In several embodiments provided in this application, it should be understood that the disclosed apparatus and method may be implemented in other manners. For example, the foregoing apparatus embodiments are only examples. For example, division into the foregoing units is only logical function division, and may be another division manner in an actual implementation. For example, a plurality of units or components may be combined or integrated into another system, or some features may be ignored or not performed. In addition, the displayed or discussed mutual couplings, direct couplings, or communication connections may be implemented through some interfaces. Indirect couplings or communication connections between the apparatuses or units may be implemented in an electrical form, a mechanical form, or another form.

The foregoing units described as separate parts may or may not be physically separate, and parts displayed as units may or may not be physical units, in other words, may be located in one position, or may be distributed on a plurality of network units. A part or all of the units may be selected based on actual requirements to implement the solutions provided in this application.

In addition, functional units in embodiments of this application may be integrated into one unit, each of the units may exist alone physically, or two or more units may be integrated into one unit.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

When software is used to implement embodiments, all or a part of the embodiments may be implemented in a form of a computer program product. The computer program product includes one or more computer instructions. When the computer program instructions are loaded and executed on a computer, the procedures or functions according to embodiments of this application are all or partially generated. The computer may be a general-purpose computer, a special-purpose computer, a computer network, or other programmable apparatuses. For example, the computer may be a personal computer, a server, or a network device. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. For the computer-readable storage medium, refer to the foregoing descriptions.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A model processing method, comprising:
collecting, by a first communication apparatus, first data information;
receiving, by the first communication apparatus, artificial intelligence AI collaboration information from a second communication apparatus; and
processing, by the first communication apparatus, an AI model of the first communication apparatus based on the first data information and the AI collaboration information.

2. The method according to claim 1, wherein the first communication apparatus comprises a first-type communication interface and/or a second-type communication interface, wherein
the first-type communication interface is used by the first communication apparatus to receive the AI collaboration information from the second communication apparatus; and
the second-type communication interface is configured to transmit the first data information between different functions in the first communication apparatus.

3. The method according to claim 2, wherein the first communication apparatus comprises a first AI function and a first communication function, and the second communication apparatus comprises a second AI function; and
the receiving, by the first communication apparatus, AI collaboration information from a second communication apparatus comprises:
receiving, by the first AI function, the AI collaboration information from the second AI function through the first-type communication interface.

4. The method according to claim 2 or 3, wherein the first communication apparatus comprises the first AI function and the first communication function; and
the collecting, by a first communication apparatus, first data information comprises:
collecting, by the first communication function, the first data information; and
sending, by the first communication function, the first data information to the first AI function through the second-type communication interface.

5. The method according to any one of claims 1 to 4, wherein the method further comprises:
sending, by the first communication apparatus to the second communication apparatus, semantic information obtained through the AI model processing of the first communication apparatus and/or a result of the AI model processing of the first communication apparatus.

6. The method according to any one of claims 1 to 5, wherein
the AI collaboration information comprises: second data information collected by the second communication apparatus and/or information related to AI model processing of the second communication apparatus.

7. The method according to claim 6, wherein the information related to the AI model processing of the second communication apparatus comprises one or more of the following:
semantic information obtained through the AI model processing of the second communication apparatus, action information of the second communication apparatus, reward information obtained through action execution by the second communication apparatus, reward information predicted by the second communication apparatus, and preset target information of the second communication apparatus.

8. The method according to claim 7, wherein
the preset target information of the second communication apparatus comprises one or more of the following information: an energy saving target, a quality of service target, and a reliability target of the second communication apparatus.

9. The method according to any one of claims 1 to 8, wherein the receiving, by the first communication apparatus, AI collaboration information from a second communication apparatus comprises:
receiving, by the first communication apparatus, control plane signaling from the second communication apparatus, wherein the control plane signaling comprises the AI collaboration information; or
receiving, by the first communication apparatus, user plane signaling from the second communication apparatus, wherein the user plane signaling comprises the AI collaboration information.

10. The method according to any one of claims 1 to 9, wherein
both the first communication apparatus and the second communication apparatus are terminal devices;
both the first communication apparatus and the second communication apparatus are network devices;
the first communication apparatus is a terminal device, and the second communication apparatus is a network device;
the first communication apparatus is a terminal device or a network device, and the second communication apparatus is a central device; or
the first communication apparatus is a central device, and the second communication apparatus is a terminal device or a network device.

11. A first communication apparatus, comprising a first artificial intelligence AI function and a first communication function, wherein
the first communication function is configured to collect first data information;
the first communication function is further configured to send the first data information to the first AI function;
the first AI function is configured to receive AI collaboration information from a second communication apparatus; and
the first AI function is further configured to process an AI model of the first communication apparatus based on the first data information and the AI collaboration information.

12. The first communication apparatus according to claim 11, wherein the first communication apparatus comprises a first-type communication interface and/or a second-type communication interface, wherein
the first-type communication interface is used by the first AI function to receive the AI collaboration information from the second communication apparatus; and
the second-type communication interface is configured to transmit the first data information between the first communication function and the first AI function.

13. The first communication apparatus according to claim 11 or 12, wherein the second communication apparatus comprises a second AI function, and the first AI function is specifically configured to receive the AI collaboration information from the second AI function.

14. The first communication apparatus according to any one of claims 11 to 13, wherein the first AI function is further configured to send, to the second communication apparatus, semantic information obtained through the AI model processing of the first communication apparatus and/or a result of the AI model processing of the first communication apparatus.

15. The first communication apparatus according to any one of claims 11 to 14, wherein the first AI function is specifically configured to receive control plane signaling from the second communication apparatus, wherein the control plane signaling comprises the AI collaboration information; or
the first AI function is specifically configured to receive user plane signaling from the second communication apparatus, wherein the user plane signaling comprises the AI collaboration information.

16. The first communication apparatus according to any one of claims 11 to 15, wherein the AI collaboration information comprises: second data information collected by the second communication apparatus and/or information related to AI model processing of the second communication apparatus.

17. The first communication apparatus according to claim 16, wherein the information related to the AI model processing of the second communication apparatus comprises one or more of the following:
semantic information obtained through the AI model processing of the second communication apparatus, action information of the second communication apparatus, reward information obtained through action execution by the second communication apparatus, reward information predicted by the second communication apparatus, and preset target information of the second communication apparatus.

18. The first communication apparatus according to claim 17, wherein
the preset target information of the second communication apparatus comprises one or more of the following information: an energy saving target, a quality of service target, and a reliability target of the second communication apparatus.

19. The first communication apparatus according to any one of claims 11 to 18, wherein
both the first communication apparatus and the second communication apparatus are terminal devices;
both the first communication apparatus and the second communication apparatus are network devices;
the first communication apparatus is a terminal device, and the second communication apparatus is a network device;
the first communication apparatus is a terminal device or a network device, and the second communication apparatus is a central device; or
the first communication apparatus is a central device, and the second communication apparatus is a terminal device or a network device.

20. The first communication apparatus according to any one of claims 11 to 19, wherein the first communication apparatus is any one of the following: a communication device, a chip, or a chip system.

21. A first communication apparatus, comprising a first-type communication interface and a second-type communication interface, wherein
the first-type communication interface is used by the first communication apparatus to receive artificial intelligence AI collaboration information from a second communication apparatus;
the second-type communication interface is configured to transmit first data information between different functions in the first communication apparatus; and
the first communication apparatus is further configured to process an AI model of the first communication apparatus based on the first data information and the AI collaboration information.

22. The first communication apparatus according to claim 21, wherein the first communication apparatus comprises a first AI function and a first communication function;
the first-type communication interface is specifically used by the first AI function to receive the AI collaboration information from the second communication apparatus; and
the second-type communication interface is specifically configured to transmit the first data information between the first communication function and the first AI function.

23. The first communication apparatus according to claim 21 or 22, wherein the second communication apparatus comprises a second AI function; and
the first-type communication interface is specifically used by the first AI function to receive the AI collaboration information from the second AI function.

24. The first communication apparatus according to any one of claims 21 to 23, wherein
the first-type communication interface is further configured to send, to the second communication apparatus, semantic information obtained through the AI model processing of the first communication apparatus and/or a result of the AI model processing of the first communication apparatus.

25. The first communication apparatus according to any one of claims 21 to 24, wherein
the first-type communication interface is specifically used by the first communication apparatus to receive control plane signaling from the second communication apparatus, wherein the control plane signaling comprises the AI collaboration information; or
the first-type communication interface is specifically used by the first communication apparatus to receive user plane signaling from the second communication apparatus, wherein the user plane signaling comprises the AI collaboration information.

26. The first communication apparatus according to any one of claims 21 to 25, wherein
the AI collaboration information comprises: second data information collected by the second communication apparatus and/or information related to AI model processing of the second communication apparatus.

27. The first communication apparatus according to claim 26, wherein the information related to the AI model processing of the second communication apparatus comprises one or more of the following:
semantic information obtained through the AI model processing of the second communication apparatus, action information of the second communication apparatus, reward information obtained through action execution by the second communication apparatus, reward information predicted by the second communication apparatus, and preset target information of the second communication apparatus.

28. The first communication apparatus according to claim 27, wherein
the preset target information of the second communication apparatus comprises one or more of the following information: an energy saving target, a quality of service target, and a reliability target of the second communication apparatus.

29. The first communication apparatus according to any one of claims 21 to 28, wherein
both the first communication apparatus and the second communication apparatus are terminal devices;
both the first communication apparatus and the second communication apparatus are network devices;
the first communication apparatus is a terminal device, and the second communication apparatus is a network device;
the first communication apparatus is a terminal device or a network device, and the second communication apparatus is a central device; or
the first communication apparatus is a central device, and the second communication apparatus is a terminal device or a network device.

30. The first communication apparatus according to any one of claims 21 to 29, wherein the first communication apparatus is any one of the following: a communication device, a chip, or a chip system.

31. A first communication apparatus, comprising a communication unit and a processing unit, wherein
the communication unit is configured to collect first data information;
the communication unit is further configured to receive artificial intelligence AI collaboration information from a second communication apparatus; and
the processing unit is configured to process an AI model of the first communication apparatus based on the first data information and the AI collaboration information.

32. The first communication apparatus according to claim 31, wherein the communication unit comprises a first-type communication interface and/or a second-type communication interface, wherein
the first-type communication interface is configured to receive the AI collaboration information from the second communication apparatus; and
the second-type communication interface is configured to transmit the first data information between different functions in the first communication apparatus.

33. The first communication apparatus according to claim 32, wherein the first communication apparatus comprises a first AI function and a first communication function, and the second communication apparatus comprises a second AI function; and
the communication unit is specifically configured to receive the AI collaboration information from the second AI function through the first-type communication interface.

34. The first communication apparatus according to claim 32 or 33, wherein the first communication apparatus comprises the first AI function and the first communication function; and
the communication unit is specifically used by the first communication function to collect the first data information, and the first communication function sends the first data information to the first AI function through the second-type communication interface.

35. The first communication apparatus according to any one of claims 31 to 34, wherein the communication unit is further configured to send, to the second communication apparatus, semantic information obtained through the AI model processing of the first communication apparatus and/or a result of the AI model processing of the first communication apparatus.

36. The first communication apparatus according to any one of claims 31 to 35, wherein
the AI collaboration information comprises: second data information collected by the second communication apparatus and/or information related to AI model processing of the second communication apparatus.

37. The first communication apparatus according to claim 36, wherein the information related to the AI model processing of the second communication apparatus comprises one or more of the following:
semantic information obtained through the AI model processing of the second communication apparatus, action information of the second communication apparatus, reward information obtained through action execution by the second communication apparatus, reward information predicted by the second communication apparatus, and preset target information of the second communication apparatus.

38. The first communication apparatus according to claim 37, wherein
the preset target information of the second communication apparatus comprises one or more of the following information: an energy saving target, a quality of service target, and a reliability target of the second communication apparatus.

39. The first communication apparatus according to any one of claims 31 to 38, wherein the communication unit is specifically configured to: receive control plane signaling from the second communication apparatus, wherein the control plane signaling comprises the AI collaboration information; or receive user plane signaling from the second communication apparatus, wherein the user plane signaling comprises the AI collaboration information.

40. The first communication apparatus according to any one of claims 31 to 39, wherein
both the first communication apparatus and the second communication apparatus are terminal devices;
both the first communication apparatus and the second communication apparatus are network devices;
the first communication apparatus is a terminal device, and the second communication apparatus is a network device;
the first communication apparatus is a terminal device or a network device, and the second communication apparatus is a central device; or
the first communication apparatus is a central device, and the second communication apparatus is a terminal device or a network device.

41. The first communication apparatus according to any one of claims 31 to 40, wherein the processing unit is a processor.

42. The first communication apparatus according to any one of claims 31 to 41, wherein the first communication apparatus is any one of the following: a communication device, a chip, or a chip system.

43. A model processing system, wherein the system comprises the first communication apparatus according to any one of claims 11 to 42.

44. The system according to claim 43, wherein the system further comprises the second communication apparatus according to any one of claims 11 to 42.

45. A communication apparatus, comprising:
a communication interface, configured to input and/or output information; and
a processor, configured to execute a computer program, to enable the apparatus to implement the method according to any one of claims 1 to 10.

46. The apparatus according to claim 45, wherein the apparatus is any one of the following: a communication device, a chip, or a chip system.

47. An apparatus, comprising:
a memory, configured to store executable instructions; and
a processor, configured to invoke and run the executable instructions in the memory, to perform the method according to any one of claims 1 to 10.

48. The apparatus according to claim 47, wherein the apparatus is any one of the following: a communication device, a chip, or a chip system.

49. A model processing system, wherein the system comprises the apparatus according to any one of claims 45 to 48.

50. A computer-readable storage medium, wherein the computer-readable storage medium stores program instructions; and when the program instructions are run by a processor, the method according to any one of claims 1 to 10 is implemented.

51. A computer program product, wherein the computer program product comprises computer program code; and when the computer program code is run on a computer, the method according to any one of claims 1 to 10 is implemented.
